(19) Europäisches Patentamt
European Patent Office
Office européen des brevets

(11) **EP 1 414 666 B1**

## (12) FASCICULE DE BREVET EUROPEEN

(45) Date de publication et mention
de la délivrance du brevet:
**10.12.2008 Bulletin 2008/50**

(51) Int Cl.:
*B60W 30/18* (2006.01)     *F16D 48/08* (2006.01)
*B60T 7/10* (2006.01)      *B60W 10/18* (2006.01)

(21) Numéro de dépôt: **02774866.4**

(22) Date de dépôt: **30.07.2002**

(86) Numéro de dépôt international:
**PCT/FR2002/002744**

(87) Numéro de publication internationale:
**WO 2003/013897 (20.02.2003 Gazette 2003/08)**

(54) **DISPOSITIF D'ASSISTANCE AU DEMARRAGE EN COTE POUR VEHICULE AUTOMOBILE**

VORRICHTUNG ZUR UNTERSTÜTZUNG DES STARTENS AN EINER STEIGUNG FÜR EIN KRAFTFAHRZEUG

UPHILL START-UP ASSISTANCE DEVICE FOR MOTOR VEHICLE

(84) Etats contractants désignés:
**AT BE BG CH CY CZ DE DK EE ES FI FR GB GR IE IT LI LU MC NL PT SE SK TR**

(30) Priorité: **07.08.2001 FR 0110558**

(43) Date de publication de la demande:
**06.05.2004 Bulletin 2004/19**

(73) Titulaire: **RENAULT S.A.S.**
**92100 Boulogne Billancourt (FR)**

(72) Inventeurs:
• **BODIN, Pascal**
**F-78280 Guyancourt (FR)**
• **DEVAUD, Emmanuel**
**F-92140 Clamart (FR)**

• **SZYMANSKI, Joël**
**F-78340 Les Clayes Sous Bois (FR)**

(56) Documents cités:
| | |
|---|---|
| **EP-A- 0 786 368** | **EP-A- 0 812 747** |
| **EP-A- 1 035 344** | **EP-A- 1 040 957** |
| **WO-A-00/76818** | **DE-A- 10 025 731** |
| **DE-A- 19 733 465** | **DE-A- 19 751 659** |
| **DE-A- 19 852 993** | **FR-A- 2 798 174** |
| **US-A- 4 717 207** | |

• **PATENT ABSTRACTS OF JAPAN vol. 015, no. 321 (M-1147), 15 août 1991 (1991-08-15) & JP 03 121959 A (ISUZU MOTORS LTD), 23 mai 1991 (1991-05-23)**

**Description**

La présente invention concerne un dispositif d'assistance au démarrage en côte pour un véhicule automobile.

Dans l'état de la technique, on connaît un dispositif manuel de freinage, appelé "frein à main", qui permet essentiellement deux fonctions. Tout d'abord, un tel dispositif permet de s'assurer mécaniquement, sans apport extérieur d'énergie, que le véhicule sera maintenu à l'état de repos, même s'il subit des actions modérées destinées à le mettre en mouvement. Cette fonction n'est pas directement concernée par la présente invention. Ensuite, à cause de particularités du dispositif d'embrayage et de l'ergonomie des commandes de conduite, le dispositif manuel de freinage permet de maintenir un véhicule dans une rampe lors du changement de rapport de boîte de vitesses sans que le véhicule redescende, puisque, le plus souvent, un changement de rapport de boîte de vitesses est précédé par un débrayage de la puissance motrice qui est déconnectée des roues, laissant le véhicule sous l'action de la pesanteur et de l'inertie sur la rampe.

Dans une telle manoeuvre dite de "démarrage en côte" ou dans des situations de conduite analogues, le conducteur, dont les deux pieds sont occupés à manoeuvrer simultanément la pédale d'embrayage et la pédale d'accélérateur, doit en même temps retenir le véhicule au moins à l'arrêt dans une côte, pendant le temps qu'il change le rapport de vitesses sur la boîte de vitesses, et équilibre la remise en marche avant du véhicule contre l'effet de la pesanteur sur la rampe.

L'utilisation d'un dispositif électrique de freinage au parking permet d'automatiser cette tâche qui se place alors sous le contrôle d'un automatisme. Cependant, l'application d'un automatisme à cette fonction de manoeuvre en côte n'est pas aussi évidente qu'il apparaît à cause du fait que, pour une commande déterminée, le dispositif électrique de freinage n'exerce pas une action identique à chaque opération à cause de l'état d'usure des freins arrière du véhicule.

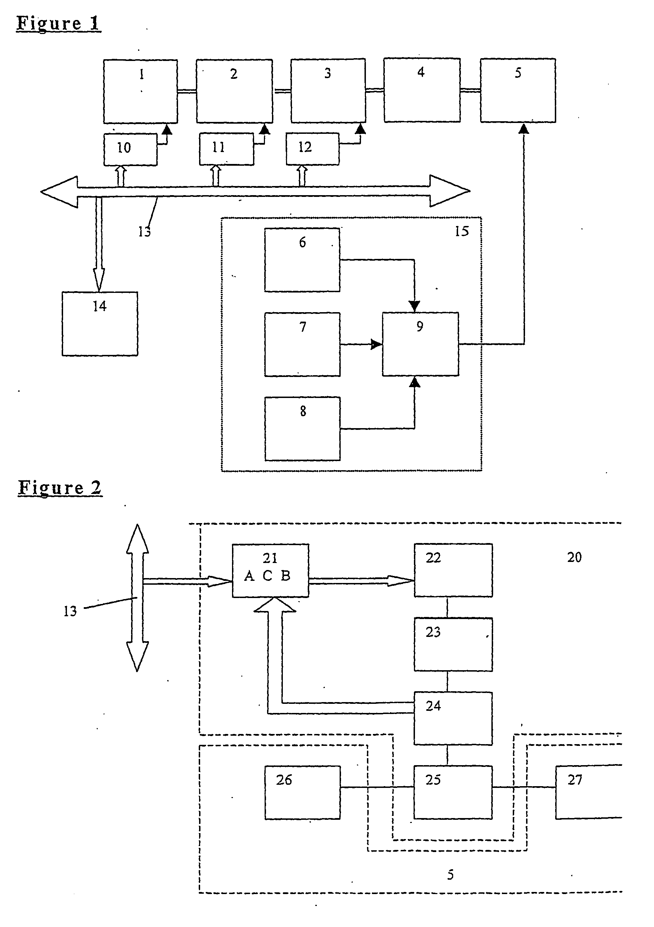

Dans l'état de la technique, il est décrit un dispositif électrique de freinage au parking dont la force de serrage, et donc de desserrage, peut être commandée sous la commande d'un organe central par l'intermédiaire d'un bus de signalisation comme un bus CAN. Un tel dispositif est parfaitement adapté à la présente invention dans le dispositif d'assistance aux manoeuvres en côte. Pour une définition de cet état de la technique, on se reportera à la description de la Figure 2 de la présente demande.

Indépendamment des problèmes liés au système de freinage, un dispositif d'assistance aux manoeuvres en côte devrait résoudre des problèmes liés à l'état de l'embrayage. En effet, le point d'embrayage, paramètre essentiel pour réaliser une manoeuvre en côte, change constamment lors de la vie du véhicule.

Par ailleurs, il faut noter que le système de freinage de nombreux véhicules comporte des actionneurs qui sont contrôlables depuis un organe central de freinage ce qui fait qu'il n'est pas nécessaire de disposer d'un dispositif électrique de freinage au parking pour mettre en oeuvre le dispositif d'assistance aux manoeuvres en côte de la présente invention. Il suffit que le véhicule soit doté d'un moyen permettant de contrôler le desserrage des freins lors de l'exécution de la manoeuvre en côte.

L'invention apporte une solution nouvelle et avantageuse pour l'assistance au conducteur lors d'une manoeuvre en côte.

Dans la demande de brevet intitulée : "CLUTCH CONTROL SYSTEM", WO 98/28162, publiée le 2 juillet, 1998 et dans la demande de brevet intitulée : "METHOD AND APPARATUS FOR OPERATING A CLUTCH IN AN AUTOMATED MECHANICAL TRANSMISSION", WO, 98/46908, publiée le 22 Octobre 1998, on a décrit un procédé d'identification du « point de léchage » de l'embrayage d'un véhicule pour des applications aux transmissions robotisées. Un tel procédé d'identification du "point de léchage" nécessite de recourir à un pilotage de l'embrayage qui n'est pas une technique simple et sûre dans le cas d'une application au parking. Par ailleurs dans ces deux documents, seul l'apprentissage du point de léchage dans la courbe d'embrayage est effectué, alors que le problème à la base de l'invention exige l'apprentissage de quasiment toute la courbe d'embrayage. Cet état de la technique ne permet donc pas de résoudre ce problème, qui d'ailleurs n'est pas le seul à la base de l'invention. EP 812747 divulgue les caractéristiques du

Preambule de la revendication 1.

Enfin, l'inventeur lors de la recherche des solutions aux différents problèmes précités s'est aperçu qu'il était impossible de produire un dispositif d'assistance aux manoeuvres en côte si un tel dispositif n'incorporait pas un moyen pour prévoir l'attitude du conducteur, pour interpréter et. pour anticiper certaines de ses commandes notamment sur la pédale d'accélérateur ou tout organe équivalent. En particulier, un tel moyen doit tenir compte de la pente dans laquelle est engagé le véhicule.

L'invention apporte une solution nouvelle et avantageuse pour résoudre ces drivers problèmes.

En effet l'invention concerne un dispositif d'assistance aux manoeuvres en côte de sorte que la tâche de retenue du véhicule dans la pente au moyen du système de freinage ne soit plus effectuée seulement par le conducteur. Le véhicule comporte un groupe motopropulseur connecté aux roues motrices par l'intermédiaire d'un embrayage et d'une boîte de vitesses dont les rapports peuvent être sélectionnés lors d'un découplage de la puissance motrice par débrayage, et enfin un système de freinage dont au moins le desserrage peut être contrôlé. A cette fin, le dispositif de l'invention comporte :

■ un moyen pour estimer la pente dans laquelle le véhicule est engagé ;

■ un moyen pour interpréter les commandes du conducteur et /ou d'un organe central de conduite ;

■ un moyen pour déterminer les caractéristiques instantanées de l'embrayage ;

■ un moyen connecté aux trois moyens précédents pour effectuer une commande de desserrage du système de freinage ; de sorte que le véhicule soit maintenu dans la pente lors de la manoeuvre.

Selon l'invention, le moyen pour effectuer une commande de desserrage des freins produit un signal de sortie actif quand le couple transmis à la roue est supérieur à une valeur prédéterminée de couple de maintien dans la pente.

Selon l'invention, le moyen comporte un moyen pour produire une valeur prédéterminée de couple de maintien dans la pente.

Selon un autre aspect de l'invention, le moyen pour produire une valeur prédéterminée de couple de maintien comporte une mémoire de caractéristiques de couples transmis pour maintenir le véhicule dans la pente dont le signal de lecture est adressé par un signal de détection produit par un capteur de pente.

Selon un autre aspect de l'invention, l'adressage de la mémoire dépend aussi d'un signal de mesure de la masse du véhicule produit par un estimateur de masse du véhicule.

Selon un autre aspect de l'invention, la mémoire de caractéristiques de couples transmis pour maintenir le véhicule dans la pente comporte un moyen de mise à jour des caractéristiques en fonction de l'usure et du vieillissement de l'embrayage.

Selon un autre aspect de l'invention, le moyen de mise à jour comporte un estimateur de couple transmis.

Selon un autre aspect de l'invention, l'estimateur de couple transmis comporte un moyen pour détecter un changement de rapport de boîte de vitesses.

Selon un autre aspect de l'invention, le moyen pour détecter un changement de rapport de boîte de vitesses comporte un moyen de détection d'une position haute, un moyen de détection d'une position basse d'embrayage, qui sont connectés à un capteur de degré d'enfoncement de la pédale d'embrayage, et un moyen pour détecter une séquence d'embrayages prédéterminée.

Selon un autre aspect de l'invention, l'estimateur de couple transmis comporte un moyen d'estimation d'un point sur la caractéristique du couple transmis à l'aide d'une estimation du couple moyen à la roue.

Selon un autre aspect de l'invention, le moyen d'estimation d'un point sur la caractéristique du couple transmis comporte un moyen de calcul qui exécute l'opération : $\hat{C}_T = C_{mEST} - J_m\dot{\omega}_m$ qui fournit la valeur estimée du couple moteur transmis.

Selon un autre aspect de l'invention, le moyen d'estimation d'un point sur la caractéristique du couple transmis comporte aussi :

- un premier moyen de test produisant un signal de test actif quand il n'y a pas de consommateurs en ligne, et qui indique que l'estimation du couple moteur est valide ;
- un second moyen de test produisant un signal de test actif en phase de ré embrayage ;
- un moyen pour estimer le rapport de transmission r(b) en phase d'embrayage ;

- un moyen de calcul de la vitesse de glissement $\Delta\omega = \omega_m - \dfrac{\omega_R}{r(b)}$ de l'embrayage.

Selon un autre aspect de l'invention, le moyen d'estimation d'un point sur la caractéristique du couple transmis comporte aussi deux moyens de test, internes au moyen de validation, et qui exécutent respectivement les tests :

$$C_{TMIN_i} \leq \hat{C}_T \leq C_{TMAX_i}$$

$$\Delta\omega \leq \Delta\omega_{SEUIL} < 0$$

de sorte que, quand les deux moyens de test ont vérifié le respect des conditions, une borne de sortie convenable du moyen de validation délivre un point capturé défini par : $P_i=(\hat{C}_{Ti}, \theta_{embi})$, au cours d'un ré embrayage, les trois valeurs de seuil $C_{TMINi}$, $C_{TMAXi}$ et $\Delta\omega_{SEUIL}$ étant enregistrées dans des mémoires permanentes du moyen de validation.

Selon un autre aspect de l'invention, l'estimateur de couple transmis comporte aussi un moyen pour réaliser une pluralité déterminée d'exécutions du moyen d'estimation d'un point sur la caractéristique du couple transmis de sorte qu'une mémoire reçoive une pluralité de points capturés pour représenter une mise à jour de la caractéristique d'embrayage.

Selon un autre aspect de l'invention, l'estimateur de couple transmis comporte aussi un moyen pour déclencher une nouvelle estimation de caractéristique de couple transmis lors de la vie du véhicule qui est actif notamment lors d'une opération de maintenance du véhicule, lors d'une commande spécifique du conducteur, lors du passage à l'état actif d'un moyen détectant que la courbe identifiée de couple transmis n'est plus convenable.

Selon un autre aspect de l'invention, l'estimateur de couple transmis comporte aussi un moyen pour filtrer les erreurs de modélisation et de mesures, qui comporte un outil pour produire une moyenne des positions des points capturés.

Selon un autre aspect de l'invention, le dispositif d'assistance comporte un moyen pour gérer la volonté du conducteur, afin d'anticiper la commande de desserrage des freins, de sorte que ce dernier intervienne à la position théorique de desserrage.

Selon un autre aspect de l'invention, le dispositif d'assistance comporte un moyen pour anticiper en tenant compte de l'activité du conducteur sur la pédale d'accélérateur.

Selon un autre aspect de l'invention, le dispositif d'assistance comporte un premier moyen pour générer une valeur de seuil pour la position d'enfoncement de la pédale d'accélérateur en fonction du régime moteur.

Selon un autre aspect de l'invention, le moyen exécute une fonction définie analytiquement par : $\theta_{accSEUIL} = f(\theta_V, N_m)$ dans laquelle les deux arguments sont la pente dans laquelle le véhicule est installé et le régime moteur.

Selon un autre aspect de l'invention, le générateur comporte une mémoire d'une table à deux entrées selon la valeur de la pente et le régime moteur produisant un signal de seuil fourni à une première entrée d'un comparateur qui reçoit sur une seconde entrée le degré d'enfoncement de la pédale d'accélérateur et qui produit un signal de sortie actif si la condition : $\theta_{acc} \geq \theta_{accSEUIL}$ est vérifiée.

Selon un autre aspect de l'invention, le dispositif d'assistance comporte un second moyen pour produire un signal d'embrayage anticipé d'une durée prédéterminée, enregistrée dans une mémoire du dispositif d'assistance, ledit moyen générateur exécutant une fonction : $\theta_{emb_{anticipé}} = \theta_{emb} + \Delta T \times \theta'_{emb}$ dans laquelle la fonction $\theta'_{emb}$ est la dérivée instantanée de la position d'enfoncement de la pédale d'embrayage.

Selon un autre aspect de l'invention, le paramètre $(\Delta T)$ est estimé en fonction de la pente dans laquelle le véhicule est maintenu.

Selon un autre aspect de l'invention, le signal représentatif du degré d'enfoncement anticipé de la pédale d'embrayage est transmis à l'entrée d'adressage d'un générateur produisant à sa sortie une valeur représentative du couple transmis à la roue sous la forme d'une fonction $C_T(\theta_{emb_{anticipé}})$ qui est transmise à une entrée d'un comparateur dont une autre entrée est connectée à la sortie de l'estimateur de couple transmis, de sorte que le comparateur place sa sortie à l'état actif si la condition $C_{TD} > C_T(\theta_{emb_{anticipé}})$ est vérifiée.

Selon un autre aspect de l'invention, les sorties des deux comparateurs sont connectées aux bornes d'entrée d'une porte ET logique dont la sortie est transmise comme ordre de desserrage quand la sortie est à l'état actif pour les freins.

Selon un autre aspect de l'invention, l'estimateur de couple transmis comporte un générateur de couple transmis dont le signal de sortie est défini par la relation paramétrique :

$$C_{T_{MAX}} = \begin{vmatrix} 0 & si & \theta_{emb} \leq \theta_{kp} \\ c_0(\theta_{emb} - \theta_{kp})^{d_0} & si & \theta_{emb} > \theta_{kp} \end{vmatrix},$$

Où $c_0$ et $d_0$ sont des facteurs de forme issus d'un identificateur de courbe d'embrayage qui travaille au voisinage d'un point prédéterminé de léchage (kp) de l'embrayage.

Selon un autre aspect de l'invention, l'identificateur de courbe d'embrayage comporte

■ une mémoire préenregistrée de tables de points d'embrayage prédéterminés pour un ensemble de valeurs de facteurs de forme, l'adresse d'une table prédéterminée correspondant à un couple dé facteurs de forme de valeurs prédéterminées ;
■ un estimateur de couple d'embrayage au moins pour deux états d'embrayage au voisinage du point de léchage ;
■ un capteur de degré d'enfoncement de la pédale d'embrayage pour indiquer au moins un premier et un second état d'embrayage après le point de léchage ; et
■ un contrôleur électronique qui comporte :

■ des moyens pour rechercher lors du premier état d'embrayage après le point de léchage, et pour une estimation produite par l'estimateur de couple d'embrayage dans ledit premier état d'embrayage, un sous-ensemble des tables de points d'embrayage dont le premier point correspond audit premier état d'embrayage,

■ des moyens pour rechercher lors du second état d'embrayage après le premier état d'embrayage et pour une estimation produite par l'estimateur de couple d'embrayage dans ledit second état d'embrayage la table de points d'embrayage appartenant audit sous-ensemble dont le second point est le plus proche et

■ des moyens pour fournir à sa sortie un couple ($c_{0i}$, $d_{0i}$) de facteurs de forme associé à la table trouvée comme identification de la courbe d'embrayage.

Selon un autre aspect de l'invention, le moyen pour détecter un changement de rapport de boîte de vitesses comporte un moyen pour estimer le rapport de transmission *r(b)* qui comporte un moyen pour exécuter un test depuis les valeurs supérieures de b, qui est décrémenté, jusqu'à ce que le test suivant soit vrai : $\omega_r > [r(b)-0.5*(r(b)-r(b-1))]\omega_m$.

Selon un autre aspect de l'invention, l'estimateur de rapport de transmission comporte aussi un moyen de test dont une première entrée reçoit le signal de vitesse de rotation des roues du véhicule produit par un capteur ou un estimateur convenable et disponible sur le bus du véhicule et une seconde entrée reçoit le signal de vitesse de rotation du moteur produit par un capteur ou un estimateur convenable et disponible sur le bus du véhicule ; en ce que l'estimateur comporte ensuite une mémoire des rapports de boîte {r(b) ; b = 6 ..1} caractéristiques du véhicule lorsque les rapports de boîte sont descendus et la sortie de lecture de la mémoire est lue par un organe de calcul qui exécute l'opération : $r(b)-0.5*(r(b)-r(b-1))$ ; en ce que le signal de sortie de l'organe de calcul est connecté à une entrée convenable du moyen de test qui reçoit aussi les deux vitesses de rotation précitées et place sa sortie à l'état actif quand le test est vérifié, de sorte que, dans ce cas, l'estimateur de rapport de transmission transmet la valeur b et/ou r(b) en sortie sur le bus du véhicule, et de sorte que, dans le cas contraire, un décrémenteur réduit la valeur de b d'une unité et applique cette valeur comme adresse de la mémoire pré enregistrée des rapports de boîte dans l'estimateur de rapport de transmission, la valeur suivante de la mémoire est alors adressée au moyen de test.

Selon un autre aspect de l'invention, les freins coopèrent avec un dispositif électrique de freinage au parking.

Selon un autre aspect de l'invention, le dispositif électrique de freinage comporte un boîtier, un contrôleur connecté au bus de signalisation, le dispositif d'assistance aux manoeuvres en côte étant un organe de commande travaillant selon le protocole du bus et le dispositif électrique de freinage au parking étant un organe commandé travaillant selon le protocole du bus.

Selon un autre aspect de l'invention, le contrôleur est connecté au bus par un port d'entrée / sortie B et des moyens pour recevoir des données représentatives de la force de serrage appliquée aux freins mécaniques du système de freinage, et mesurée par un capteur de force interposé entre un moteur électrique monté dans le boîtier et un convertisseur mécanique dont un levier articulé de sortie permet de mobiliser deux câbles de commande des freins selon une force de serrage déterminée par le couple moteur appliqué par le moteur électrique;

et le moteur électrique est alimenté depuis la batterie du véhicule par l'intermédiaire d'un circuit de pilotage qui est réalisé de manière à commander le courant électrique traversant le moteur électrique, ce courant électrique étant calculé et contrôlé par le contrôleur dont un port de sortie A est connecté aux entrées convenables du circuit de pilotage ou pilote.

Selon un autre aspect de l'invention, le dispositif d'assistance est réalisé sous forme d'un programme enregistré et exécuté sur le calculateur du véhicule.

D'autres caractéristiques et avantages de la présente invention seront mieux compris à l'aide de la description et des dessins annexés dans lesquels :

- la figure 1 est un schéma bloc d'un véhicule équipé d'un dispositif d'assistance aux manoeuvres en côte selon l'invention ;
- la figure 2 est un schéma bloc d'un dispositif électrique de freinage au parking exploité par le dispositif de l'invention dans un mode préféré de réalisation ;
- la figure 3 est un graphique représentant la position de la pédale d'embrayage permettant au véhicule de se maintenir à l'arrêt dans une pente, dont la mesure est portée en abscisses ;
- la figure 4 est un schéma bloc représentant un premier mode de réalisation d'une partie du dispositif de la figure 1 ;
- la figure 5 est un graphique représentant des cas de vieillissement de l'embrayage, défaut pallié par une disposition particulière de l'invention ;
- la figure 6 est plusieurs graphiques pour expliquer un moyen de l'invention pour tenir compte du vieillissement de l'embrayage ;
- la figure 7 est un schéma bloc d'un autre mode de réalisation d'une partie du dispositif de la figure 1 pour anticiper la volonté du conducteur ;
- la figure 8 est un schéma bloc d'une variante de réalisation d'une partie du dispositif de l'invention.

A la figure 1, on a représenté un schéma bloc d'un véhicule équipé d'un dispositif d'assistance aux manoeuvres en côte selon l'invention. Le véhicule comporte un groupe motopropulseur 1 connecté par son arbre de sortie à un embrayage 2 dont l'arbre de sortie est connecté à l'arbre primaire d'une boîte de vitesses 3 dont l'arbre secondaire est connecté de manière connue aux roues motrices 4 du véhicule. Un système de freinage mécanique 5 agit sur les roues, par exemple sur les roues motrices 4 ou d'autres roues du véhicule selon le genre de propulsion utilisé. Le groupe motopropulseur ou moteur 1 est commandé au moyen d'une pédale d'accélérateur ou de tout autre moyen convenable à la discrétion du conducteur ou d'un organe de commande centrale 14 connecté par un bus de signalisation dans le véhicule comme un bus CAN 13. L'embrayage 2 coopère avec un organe de débrayage 11 qui peut être une pédale d'embrayage manoeuvré par le conducteur ou un actionneur contrôlable depuis le bus CAN 13 par l'organe de commande centrale 14 du véhicule. La boîte de vitesses 3 coopère avec un organe de commande de changement de rapport 12 comme un levier de vitesses manoeuvré par le conducteur ou un organe automatique de changement de rapports contrôlé depuis le bus CAN 13 par l'organe de commande centrale 14.

Le dispositif 15 d'assistance aux manoeuvres en côte de l'invention comporte :

■ un moyen 6 pour estimer la pente dans laquelle le véhicule est engagé ;
■ un moyen 7 pour interpréter et anticiper les commandes du conducteur et / ou d'un organe central de conduite ;
■ un moyen 8 pour déterminer les caractéristiques instantanées de l'embrayage ;
■ un moyen 9 connecté aux trois moyens précédents 6 à 8 pour effectuer une commande de desserrage du système de freinage ;
de sorte que le véhicule soit maintenu dans la pente lors de la manoeuvre.

Le dispositif 15 d'assistance aux manoeuvres en côte de l'invention tient compte de la pente, de la volonté du conducteur et de l'état d'usure de l'embrayage. Le dispositif 15 exploite :

-    un moyen d'identification de la courbe d'embrayage pour estimer de manière instantanée le couple transmis par l'embrayage 2 en fonction de la position de la pédale d'embrayage 11, dans les phases de changement de rapports de boite 3 ;
-    un moyen pour établir et exploiter une cartographie, paramétrable notamment lors de phases d'initialisation ou de maintenance du véhicule, donnant la valeur du couple de desserrage en fonction de la pente du véhicule, et finalement
-    un moyen d'interprétation et d'anticipation des actions du conducteur sur les pédales.

Le dispositif de freinage 5 peut comporter deux freins mécaniques qui agissent sur des roues 4 et que le dispositif d'assistance 15 peut directement commander, par exemple par l'intermédiaire d'un actionneur de freinage contrôlable depuis le bus de signalisation 13. Mais, il peut aussi utiliser un dispositif électrique de freinage au parking comme celui décrit dans la demande de brevet précitée, déposée le même jour au nom du même déposant, et dont la force de serrage agit directement sur le système de freinage 5.

A la figure 2, on a décrit un tel dispositif électrique de freinage. Il comporte essentiellement un boîtier 20 disposé par exemple à proximité de l'essieu portant le système de freinage 5 et qui est lui-même composé de freins mécaniques 26 agissant sur la roue gauche et 27 agissant sur la roue droite. Il est entendu que ces roues peuvent ou non être des roues connectées au moteur 1 comme il est représenté à la figure 1.

Chaque frein 26 ou 27 peut être commandé par un actionneur commandé directement par un circuit de freinage non représenté et non directement concerné dans le mode de realisation décrit ici. Cependant, dans un autre mode de réalisation, ce circuit de freinage peut lui-même être directement commandé par le dispositif d'assistance aux manoeuvres en côte de l'invention en lieu et place du dispositif électrique 20 représenté à la figure 2.

Quand le dispositif d'assistance aux manoeuvres en côte de l'invention coopère avec un dispositif électrique de freinage 20, ce dernier comporte un contrôleur 21 connecté au bus de signalisation 13 sur lequel le port de sortie du dispositif 15 de la figure 1 est alors connecté. Le dispositif 15 (Figure 1) est alors un organe de commande travaillant selon le protocole du bus 13 et le dispositif électrique 20 de freinage au parking est un organe commandé travaillant selon le protocole du bus 13. Un tel protocole peut être le protocole CAN.

Le contrôleur 21 est connecté au bus 13 par un port d'entrée/sortie B et il échange les diverses données nécessaires. Le contrôleur 21 comporte ensuite des moyens pour recevoir des données représentatives de la force de serrage appliquée aux freins mécaniques 26 et 27 du système de freinage 5, cette force étant mesurée par un capteur de force 24 interposé entre un moteur électrique 23 monté dans le boîtier 20 et un convertisseur mécanique 25 dont un levier articulé convenable de sortie permet de mobiliser deux câbles de commande des freins 26 et 27 selon une force de serrage déterminée par le couple moteur appliqué par le moteur électrique 23.

Le moteur électrique 23 est alimenté depuis la batterie (non représentée) du véhicule par l'intermédiaire d'un circuit de pilotage 22 qui est réalisée de manière à commander le courant électrique traversant le moteur électrique, ce courant électrique étant calculé et contrôlé par le contrôleur 20 dont un port de sortie A est connecté aux entrées convenables du circuit de pilotage ou pilote 22.

Dans une telle disposition, le dispositif 15 d'assistance aux manoeuvres en côte de l'invention, par son moyen de calcul 9, produit à destination du système de freinage 5 un ordre de desserrage des freins 26 et 27 qui est en correspondance avec les divers paramètres de l'invention qui vont maintenant être décrits.

Le dispositif d'assistance aux manoeuvres en côte présente les avantages suivants :

    1. il est insensible aux usures d'embrayage,
    2. il est insensible aux dispersions de fabrications des embrayages,
    3. il est peu sensible au tangage de la caisse à l'arrêt, dû aux mouvement des passagers du véhicule par exemple,
    4. il s'adapte au style de démarrage du conducteur,
    5. il est aisément paramétrable, à partir de procédures d'essai clairement identifiées.

Dans la suite de la description, les paramètres suivants sont tous pris en compte, détectés, mémorisés, calculés ou commandés par les moyens de l'invention. La première colonne identifie le nom de la variable mathématique, la seconde colonne décrit la fonction de la variable ou paramètre et la troisième colonne indique l'unité de mesure de la variable ou paramètre.

Les variables d'efforts sont :

| | | |
|---|---|---|
| $C_{mCME}$ | le couple moyen effectif délivré par le moteur, estimé par le calculateur moteur | N.m |
| $C_T$ | couple transmis par l'embrayage | N.m |
| $C_R$ | couple appliqué à la roue | N.m |
| $F_X$ | force de frottement longitudinale de contact pneu-sol global véhicule | N |
| $\hat{C}_T$ | estimation du couple transmis par l'embrayage | N.m |
| $C_{RES}$ | couple de frottement dans la chaîne de transmission, roue incluse | N.m |
| | Les variables cinématiques sont : | |
| $\omega_m$ | vitesse angulaire de rotation du moteur | $rad.s^{-1}$ |
| $\omega_R$ | vitesse angulaire de rotation des roues avants | $rad.s^{-1}$ |
| $\nu$ | vitesse longitudinale du véhicule | $m.s^{-1}$ |
| $\theta_{emb}$ | position de la pédale d'embrayage | % |
| $\theta_{acc}$ | position de la pédale d'accélérateur | % |
| $\theta_V$ | pente du véhicule | rad |
| | Les paramètres mécaniques et géométriques sont : | |
| $J_m$ | inertie en rotation de l'arbre moteur (représente l'inertie moteur + inertie du plateau primaire d'embrayage | $kg.m^2$ |
| $m$ | masse du véhicule | kg |
| $b$ | position du levier de boite de vitesse $b \in \{-1\ 0\ 1\ ...\ 6\}$, - | |
| $r(x)$ | fonction donnant le rapport de boite et pont en fonction de la position du levier de vitesse. | |
| $\rho_C$ | rayon sous charge des pneumatiques | m |
| $g$ | module du vecteur accélération de la gravité | $ms^{-2}$ |

On va maintenant décrire le principe de la solution mise en oeuvre dans le dispositif d'assistance de l'invention.

Un véhicule stationné en pente doit vaincre la force d'attraction de la gravité pour démarrer. Cette force est fonction de la pente $\theta_V$ et de la masse $m$ du véhicule, et vaut $mg \sin\theta_V$. Le couple $C_{TD}$ devant être transmis par l'embrayage à la roue pour démarrer est alors donné par la relation suivante :

$$C_{T_D} = r(b)\rho_C mg \sin\dot\theta_V + C_R, \qquad\qquad (1)$$

où $r(b)$ est le rapport de boite correspondant à la position b du levier de vitesse, et $C_R$ est le couple résiduel de frottement dans la chaîne de transmission incluant la résistance au roulement des pneumatiques.

La stratégie appliquée par le dispositif d'assistance aux manoeuvres en côte est basée sur l'utilisation de cette relation. Elle consiste à relâcher le frein de parking, en phase d'embrayage à l'arrêt, lorsque le couple transmis par l'embrayage $C_T$ est supérieur à $C_{TD}$. Plus généralement, le moyen 9 pour effectuer une commande de desserrage du système de freinage 5 produit une commande de desserrage du système de freinage lorsque l'embrayage 2 est en phase d'embrayage le véhicule étant à l'arrêt, moteur actif alors que le conducteur ou un système d'embrayage automatisé commence à embrayer, quand le couple transmis par l'embrayage est supérieur au couple de démarrage à la roue.

Un autre aspect de l'invention consiste à estimer le couple transmis par l'embrayage.

Dans un mode de réalisation de l'invention, le dispositif de l'invention comporte un moyen pour déterminer le couple à partir de la connaissance à priori de la courbe de frottement d'embrayage, donnant le couple de frottement en fonction de la position pédale d'embrayage. Ce couple de frottement est le couple transmissible par l'embrayage. Pour un véhicule donné sur lequel est installé le dispositif de l'invention, il est prévu un moyen pour indiquer la position que doit prendre la pédale d'embrayage pour produire un couple de démarrage qui équilibre le poids du véhicule dans la pente. Ce moyen travaille donc en fonction de la pente, c'est à dire que le dispositif de l'invention comporte un moyen pour résoudre en fonction de la position d'embrayage $\theta_{emb}$, pour chaque valeur de pente $\theta_v$ l'équation suivante :

$$C_T\left(\theta_{emb}\right) = r(b)\rho_C mg \sin\theta_v \cdot + C_R \,, \tag{2}$$

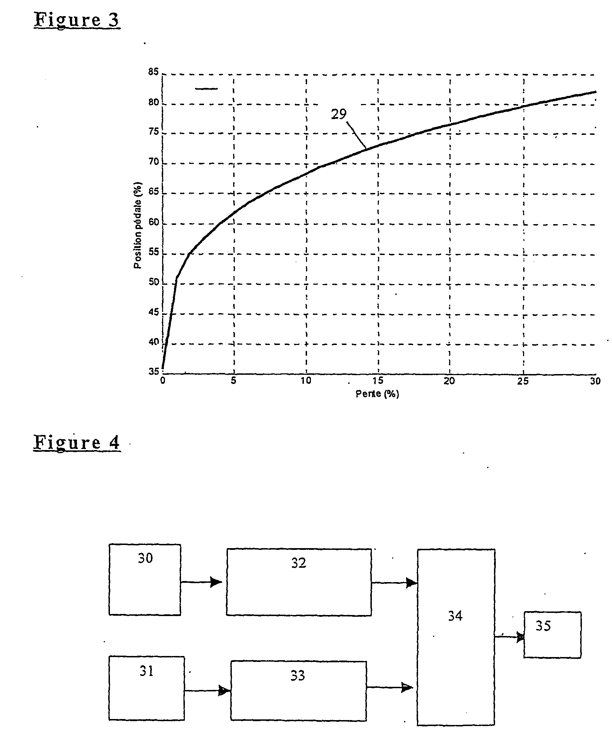

où $C_T(\theta_{emb})$ est la caractéristique du couple d'embrayage. Dans un mode de réalisation de l'invention, la caractéristique du couple d'embrayage est enregistrée sous forme d'une cartographie, c'est-à-dire d'une table à deux entrées, mémorisée dans le moyen 7. Une telle table peut être établie graphiquement selon la courbe 29 en mesurant pour différentes pentes dans lesquelles se trouve le véhicule la position de la pédale d'embrayage qui maintient le véhicule dans la pente. La suite des mesures peut alors être représentée comme il est représenté à la figure 3 dans laquelle on a reporté en abscisse la pente en pour cents et en ordonnées la position de la pédale d'embrayage. En appliquant alors la relation (2), il est alors possible d'en déduire une table portant en première entrée la position de la pédale d'embrayage $\theta_{emb}$ et en calculant à chaque fois avec la pente $\theta_v$ prise sur le graphique des mesures de la figure 1, la valeur du couple transmissible $C_T$ calculée avec la relation (2). Ces diverses valeurs peuvent être enregistrées dans une mémoire convenable du moyen 7 lors de l'initialisation du dispositif d'assistance 15 de l'invention.

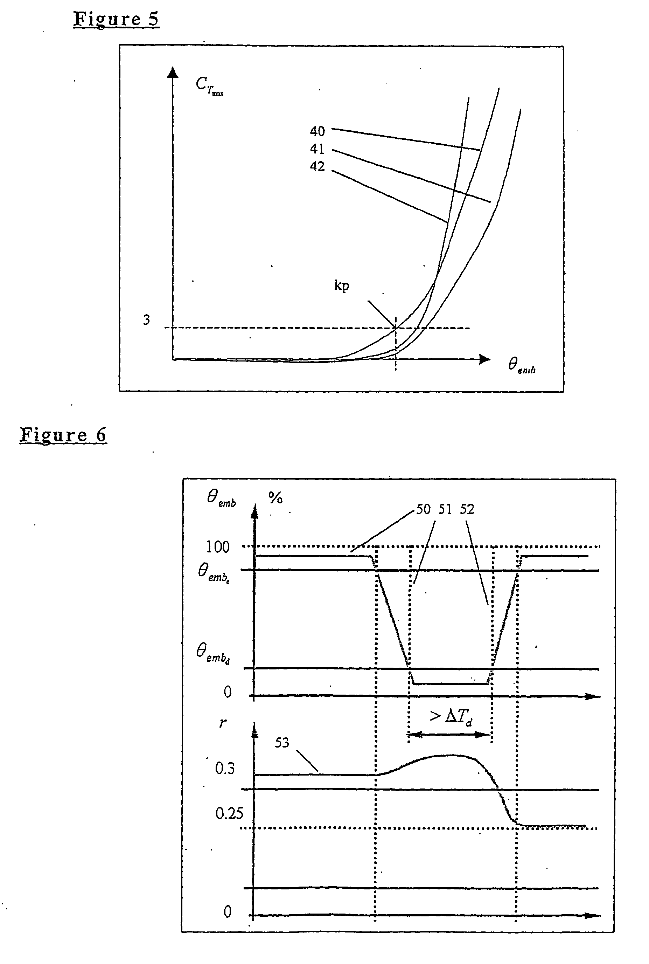

A la figure 5, on a représenté une série de courbes 40, 41 et 42 qui représentent, à trois époques de la vie de l'embrayage la réponse de l'embrayage 2 à un enfoncement de la pédale d'embrayage ou à une commande d'effet équivalent.

Dans ce qui suit, on va utiliser exclusivement la courbe 41 et on expliquera plus loin l'intérêt des courbes 40 et 42. Lorsque le véhicule commence à circuler, la réponse de l'embrayage, qui se mesure par le couple à la roue, produit une valeur déterminée $C_T$ du couple à la roue que le moteur produit. La connaissance du degré d'enfoncement $\theta_{emb}$ de la pédale d'embrayage, paramètre porté en abscisses de la caractéristique d'embrayage de la figure 5, permet donc de déterminer sans mesure particulière, la valeur du couple transmis à la roue $C_T$.

A la figure 4, on a représenté une partie du dispositif 15 d'assistance au démarrage en côte de la figure 1 qui met en oeuvre la stratégie décrite ci-dessus.

Le dispositif d'assistance de la figure 4 comporte un capteur de pente 30. Le capteur de pente 30 peut comporter un vase étanche et deux électrodes plongées dans un liquide conducteur. Les électrodes sont connectées en série à une source de tension électrique (non représentée) et à un circuit de mesure du courant électrique traversant le circuit série ainsi constitué. La mesure de l'intensité électrique, ou de toute autre grandeur électrique qui varie dans le capteur quand celui-ci s'incline de sorte que les surfaces de contact entre les électrodes et le liquide conducteur varient de manière monotone avec l'angle de pente, permet donc d'adresser une table à deux entrées, enregistrée dans un moyen mémoire associé au capteur 30 (et non représenté à la figure), de sorte que la comparaison de la mesure échantillonnée et numérisée de ladite mesure électrique à l'aide d'un convertisseur convenable (non représenté à la figure) soit elle-même convertie par adressage du moyen mémoire enregistrant la caractéristique de réponse du capteur 30 en fonction de la pente, en un signal de mesure de la pente $\theta_v$.

Le signal de mesure issu du capteur 30 est communiqué en entrée d'un générateur de couple transmis 32 qui comporte en pratique un moyen mémoire (non représenté) d'une table dont l'adressage dépend de la pente et donc du signal de mesure issu du capteur 30, et qui produit en sortie une estimation du couple transmis à la roue pour assurer un maintien du véhicule dans la pente ainsi mesurée. Le moyen mémoire d'une table dont l'adresse dépend de la pente comporte comme valeur de sortie la suite des valeurs de couple à la roue qui, en fonction de la pente dans laquelle est placé le véhicule, résolvent la relation (2).

On note que la relation (2) dépend aussi de la masse du véhicule. Le moyen mémoire d'une table dont l'adresse dépend de la pente comporte, dans un mode de réalisation, l'enregistrement d'une pluralité de caractéristiques de couple transmis à la roue en fonction de la pente, chacune $CAR_i$ étant calculée et/ou mesurée pour une masse $m_i$ du véhicule, et. la table en relation avec la masse étant adressée par un estimateur de la masse du véhicule (non représenté) qui est connecté en entrée du générateur 32.

La pédale d'embrayage ou un organe convenable de commande de l'embrayage 2 (Figure 1), est couplée à un capteur 31 du degré d'enfoncement de la pédale d'embrayage qui produit un signal de sortie $\theta_{emb}$ qui est transmis à l'entrée d'un estimateur du couple à la roue 33 qui comporte un moyen mémoire dans lequel est enregistrée la caractéristique d'embrayage 41 de la figure 5. Il en résulte que, pour un degré d'enfoncement $\theta_{emb}$ de la pédale d'embrayage, le générateur 33 produit un signal de sortie $C_T$ représentatif du couple à la roue actuellement appliquée lors d'un démarrage en côte ou de toute opération de réembrayage. Le moyen mémoire dans lequel est enregistrée la caractéristique d'embrayage coopère avec un moyen d'entrée qui permet, pour une valeur du paramètre d'enfoncement de la pédale d'embrayage $\theta_{emb}$ de produire une valeur estimée du couple à la roue $C_T$ qui est en cours de production par la chaîne de transmission 1 - 4 (Figure 1) du véhicule.

Le dispositif d'assistance de l'invention, dans le mode de réalisation de la figure 4, comporte enfin un comparateur 34 qui reçoit sur une première entrée le signal de sortie du générateur 32 représentatif du couple de maintien dans la pente et sur une seconde entrée le signal de sortie de l'estimateur 33 représentatif du couple à la roue estimé. Le comparateur 33 produit un signal de relâchement des freins 35 seulement quand la condition : $C_{Tmax} \leq C_T$ est réalisée.

On remarque que lors d'une manoeuvre en côte, le dispositif d'assistance de l'invention peut entrer en fonction plusieurs fois, en particulier si, pour une raison particulière (due à un changement de pente, de régime moteur, de commande du conducteur ou autre), la condition précitée devient fausse à nouveau.

Dans un tel cas, le dispositif de l'invention coopère aussi avec un moyen de réactivation des freins (5, figure 1) qui commande à nouveau un resserrement des freins.

La stratégie mise en oeuvre dans le mode de réalisation du dispositif représenté à la figure 4 fonctionne de manière satisfaisante. Mais, elle est sensible à l'usure et au vieillissement de l'embrayage. Dans un mode de réalisation préféré, le dispositif d'assistance de l'invention comporte donc un moyen pour recaler la caractéristique d'embrayage comme celle représentée à la figure 3 et qui est enregistrée dans le générateur 32, en cours d'utilisation du véhicule.

On va maintenant décrire le moyen de recalage de la cartographie du couple d'embrayage.

La caractéristique du couple d'embrayage est la relation liant la position de la pédale d'embrayage 11 au couple transmissible par l'embrayage. Cette caractéristique est représentée par une courbe à l'allure représentée sur la figure 5. On définit sur cette courbe le point de léchage kp ou position de la pédale d'embrayage 11 sur laquelle le couple transmis par l'embrayage 2, en phase de glissement, est arbitrairement de 3 N.m.

Cette caractéristique évolue dans le temps, avec l'usure de la garniture du plateau de friction, et « l'usure » des ressorts de pression de l'embrayage 2.

Les informations disponibles sur le véhicule et transmises au moyen du dispositif d'assistance 15 sont les suivantes :

➢ $C_{mCME}$ : couple moyen effectif délivré par le moteur 1, estimé par un calculateur de contrôle (non représenté) du moteur 1, et disponible à tout instant sur le bus 13, en *N.m*

➢ $\omega_m$ : vitesse angulaire de rotation du moteur 1, mesurée par un capteur de régime moteur (non représenté) et disponible à tout instant sur le bus 13, et exprimée en *rad.s*$^{-1}$,

➢ $\omega_R$ : vitesse angulaire de rotation des roues 4, mesurée par un capteur de vitesse de rotation (non représenté) des roues 4 ou calculée à l'aide d'un estimateur de vitesse angulaire des roues 4 (non représenté) en fonction de la vitesse angulaire de rotation du moteur et des divers rapports de transformation de la chaîne de transmission, et disponible à tout instant sur le bus 13, exprimée en *rad.s*$^{-1}$,

➢ $\nu$ : vitesse longitudinale du véhicule, mesurée à l'aide d'un capteur de vitesse longitudinale du véhicule (non représenté) ou d'un estimateur de vitesse longitudinale du véhicule (non représenté), et disponible à tout instant sur le bus 13, en *m.s*$^{-1}$,

➢ $\theta_{emb}$ : position de la pédale d'embrayage, mesurée à l'aide d'un capteur du degré d'enfoncement de la pédale d'embrayage (non représenté), et disponible à tout instant sur le bus 13, en %,

➢ $\theta_{acc}$ : position de la pédale d'accélérateur, mesurée à l'aide d'un capteur du degré d'enfoncement de la pédale d'accélérateur (non représenté), et disponible à tout instant sur le bus 13, en %.

On va maintenant décrire un moyen d'estimation, appelé aussi estimateur de couple transmis, de la courbe du couple transmis par l'embrayage 2 en phase d'embrayage en rapports descendants, c'est-à-dire lorsque la commande 12 des rapports de boîte de vitesses 3 produit des rapports de vitesses descendants de la position "cinq" ou "six" vers la première vitesse ou rapport "un". En effet, selon l'invention, l'estimateur de couple transmis travaille dans des phases de changement de rapport descendant. Les conditions d'observations sont précisées sur la figure 6.

A la figure 6, on a représenté de bas en haut :

- un premier graphe représentant la variation du rapport de transmission *r* ;
- un second graphe représentant la variation $\theta_{emb}$ du degré d'enfoncement de la pédale d'embrayage, au cours du temps t.

L'estimateur de couple transmis comporte une mémoire de deux constantes prédéterminées qui sont :

- $\theta_{emb,e}$ qui indique un seuil déterminant que la pédale est dans une position embrayée si $\theta_{emb,e} > \theta_{emb}$ ;
- $\theta_{emb,d}$ qui indique un seuil déterminant que la pédale est dans une position embrayée si $\theta_{emb} < \theta_{emb,d}$.

L'estimateur de couple transmis comporte aussi un moyen pour détecter un changement de rapport, défini par la détection d'un passage de la pédale d'embrayage par une position haute, puis une position basse, puis une position haute, tel que représenté à l'aide de la courbe 50. Le moyen pour détecter un changement de rapport comporte donc un moyen de détection d'une position haute, et un moyen de détection d'une position basse, moyens définis selon le tableau suivant :

Position Haute $\theta_{emb} > \theta_{emb_e}$

Position Basse $\theta_{emb} < \theta_{emb_d}$

Le moyen pour détecter un changement de rapport comporte donc, outre les deux moyens de détection d'une position haute et d'une position basse, un moyen pour détecter une séquence au cours de laquelle successivement le moyen pour détecter une position haute, puis le moyen pour détecter une position basse, puis le moyen pour détecter une position haute, sont successivement actifs. A cette fin, le moyen de détection de séquence de positions d'embrayage comporte deux entrées et une mémoire à accès série qui enregistre un "1" à chaque fois que l'un des moyens pour détecter une position haute ou basse est actif et dans l'ordre précité. Quand le mot d'état enregistré dans la mémoire à accès série est acquis à la fin du troisième changement d'état, un comparateur (non représenté), connecté à la fois à la mémoire à accès série et à une mémoire permanente du mot représentatif de la séquence recherché, passe à l'état actif, plaçant la sortie du moyen pour détecter un changement de rapport à l'état actif, pour indiquer qu'un changement de rapport est intervenu.

On note sur le second graphe qu'entre les instants 51 et 52, une durée de débrayage $\Delta T_d$ est indiquée. Avant l'instant 51, le rapport de transmission $r$ (premier graphe) vaut une valeur de 0,3. Puis, après l'instant 52, le rapport de transmission $r$ vaut 0,25 lorsque le changement de rapport détecté est de type descendant. Entre ces deux états, le rapport de transmission $r$ évolue de manière indéterminée.

L'estimateur de couple transmis de l'invention comporte ensuite un moyen d'estimation d'un point sur la caractéristique du couple transmis à l'aide d'une estimation du couple moyen à la roue.

Le moyen d'estimation d'un point de couple transmis utilise la relation définissant le couple transmis par l'embrayage 2 en fonction du rapport de transmission r appliqué par la boîte de vitesses 3 notamment en fonction du rapport de vitesses engagé b, définie par : $C_T = r(b) \times C_R$. Le moyen d'estimation d'un point de couple transmis comporte un moyen de calcul qui exécute l'opération : $\hat{C}_T = C_{m_{EXT}} - J_m \dot{\omega}_m$ qui fournit la valeur estimée du couple moteur transmis.

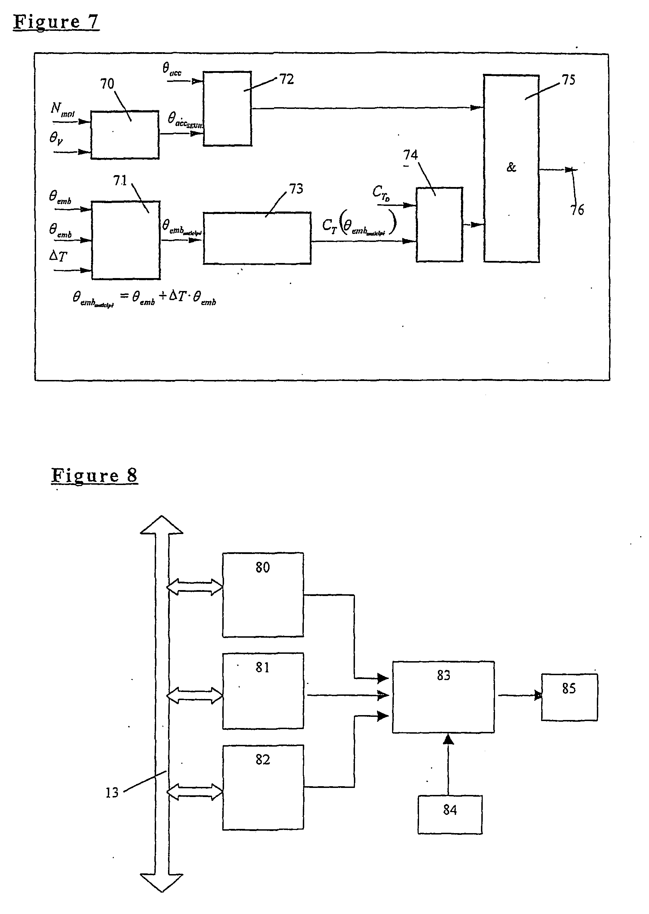

Le moyen d'estimation d'un point de la courbe d'embrayage travaillé à posteriori après avoir effectué le fonctionnement des moyens suivants représentés à la figure 8 :

- un premier moyen de test 80 produisant un signal de test actif quand il n'y a pas de consommateurs en ligne, et qui indique que l'estimation du couple moteur est valide ;
- un second moyen de test 81 produisant un signal de test actif quand on est en phase de ré embrayage et qui fonctionne comme il a été décrit plus haut ;
- un moyen 82 pour estimer le rapport de transmission r(b) en phase d'embrayage (après l'instant 52, figure 5) ;
- un moyen de calcul 83 de la vitesse de glissement $\Delta\omega = \omega_m - \dfrac{\omega_R}{r(b)}$ de l'embrayage.

Le moyen de calcul 83 est connecté aux capteurs de vitesse de véhicule et de régime moteur 84 et produit un signal de sortie $\Delta\omega$ à destination d'un moyen 85 pour valider la capture d'un point de la courbe d'embrayage.

Les conditions de capture d'un point de la courbe d'embrayage (d'indice i) sont détectées à l'aide de deux moyens de test, internes au moyen de validation 85, et qui exécutent respectivement les tests :

$$C'_{TMIN_i} \leq \hat{C}_T \leq C_{TMAX_i}$$

$$\Delta\omega \leq \Delta\omega_{SEUIL} < 0$$

de sorte que, quand les deux moyens de test ont vérifié le respect des conditions, une borne de sortie convenable du moyen de validation 85 délivre un point capturé sur la courbe d'embrayage, point défini par : $P_i = (\hat{C}_{T_i}, \theta_{emb_i})$, qui définit le point capturé au cours d'un ré embrayage.

Les trois valeurs de seuil des deux tests ci-dessus, $C_{TMINi}$, $C_{TMAXi}$ et $\Delta\omega_{SEUIL}$ sont, ainsi qu'il est connu, enregistrées dans des mémoires permanentes du moyen de validation 85.

L'estimateur de couple transmis comporte donc un moyen pour réaliser une pluralité déterminée d'exécutions du moyen d'estimation d'un point de la courbe d'embrayage de sorte que la courbe comme la courbe 40 ou 41 ou 42 peut être enregistrée en un nombre prédéterminé de points Pi dans le moyen convenable du dispositif d'assistance de l'invention.

L'estimateur de couple transmis comporte enfin un moyen pour déclencher une nouvelle estimation de caractéristique de couple transmis lors de la vie du véhicule qui est actif notamment lors d'une opération de maintenance du véhicule, lors d'une commande spécifique du conducteur, lors du passage à l'état actif d'un moyen détectant que la courbe identifiée de couple transmis n'est plus convenable.

Dans un mode de réalisation, le moyen de validation 85 du point capturé coopère avec un moyen (non représenté) pour filtrer les erreurs de modélisation et de mesures, qui comporte un outil pour produire une moyenne des positions des points ainsi capturés.

Le dispositif d'assistance au démarrage en côte décrit ci-dessus travaille sur un critère de desserrage des freins purement théorique, sur le seul couple de maintien du véhicule dans la côte. De nombreux essais réalisés sur véhicule montrent que ce seuil est satisfaisant pour de petites vitesses d'embrayage. Pour des vitesses d'embrayage élevées, les passagers du véhicule ont le sentiment d'être retenu avant de décoller.

Pour remédier à cet inconvénient, le Dispositif d'assistance de l'invention comporte aussi un moyen pour gérer la volonté ou l'intention du conducteur, afin d'anticiper la commande de desserrage des freins, pour que ce dernier intervienne efficacement à la position théorique de desserrage.

Par ailleurs, il est nécessaire d'anticiper en tenant compte de l'activité du conducteur sur la pédale d'accélérateur. En effet, à l'instant théorique de desserrage le couple fourni par le moteur doit être au moins supérieur au couple transmis dans l'embrayage, car dans le cas contraire, il y a presque toujours calage du moteur.

Pour remédier à cet autre inconvénient, le dispositif d'assistance selon l'invention comporte un moyen pour tester deux conditions :

1- le conducteur accélère pour éviter le calage,
2- le régime moteur est suffisant pour générer le couple demandé par le conducteur.

A la figure 7, on a représenté un autre mode de réalisation du dispositif d'assistance de la figure 1 dans lequel on résout les deux inconvénients précités. Les divers paramètres portés à la figure 7 sont produits par des capteurs ou des estimateurs spécialisés ainsi qu'il a été décrit ou défini plus haut. Préférentiellement, ces paramètres sont disponibles sous forme de signaux échangés sur le bus 13 (non représenté à la figure 7) et les moyens du dispositif de la figure 7 sont configurés pour l'échange avec le bus 13.

Le dispositif de l'invention comporte un premier moyen 70 pour générer une valeur de seuil pour la position d'enfoncement de la pédale d'accélérateur en fonction du régime moteur. Le moyen 70 exécute alors une fonction définie analytiquement par : $\theta_{acc_{SEUIL}} = f(\theta_V, N_m)$ dans laquelle les deux arguments sont la pente dans laquelle le véhicule est installé et le régime moteur.

Le signal de sortie du générateur 70 est un signal de seuil pour le degré d'enfoncement de la pédale d'accélérateur. Le signal de seuil est préférentiellement enregistré dans une table à deux entrées selon la valeur de la pente et le régime moteur. Le signal de seuil est alors fourni à une première entrée d'un comparateur 72 qui reçoit sur une seconde entrée le degré d'enfoncement de la pédale d'accélérateur. Le comparateur produit un signal de sortie actif si la condition : $\theta_{acc} \geq \theta_{acc_{SEUIL}}$ est vérifiée.

Le dispositif de l'invention comporte un second moyen 71 pour produire un signal d'embrayage anticipé d'une durée $\Delta T$ prédéterminée, enregistrée dans une mémoire convenable du dispositif d'assistance. Le moyen générateur 71 exécute la fonction : $\theta_{emb_{anticipe}} = \theta_{emb} + \Delta T \times \theta'_{emb}$

dans laquelle la fonction $\theta'_{emb}$ est la dérivée instantanée de la position d'enfoncement de la pédale d'embrayage. On remarque que plus la vitesse de relevage de la pédale d'embrayage est élevée, plus le degré d'enfoncement anticipé sera important.

Le dispositif de l'invention comporte donc un moyen pour produire le paramètre $\Delta T$ estimé en fonction de la pente dans laquelle le véhicule est maintenu.

Le signal représentatif du degré d'enfoncement anticipé de la pédale d'embrayage est alors transmis à l'entrée d'adressage d'un générateur 73 produisant à sa sortie une valeur représentative du couple transmis à la roue pour maintenir le véhicule en côte. Le générateur 73 travaille et est mis à jour selon ce qui a été décrit plus haut. La valeur de sortie produite par le générateur 73 est une fonction $C_T(\theta_{emb_{anticipe}})$ qui est transmise à une entrée d'un comparateur 74 dont une autre entrée est connectée à la sortie de l'estimateur de couple transmis (non représenté) précédemment décrit, de sorte que le comparateur 74 place sa sortie à l'état actif si la condition $C_{TD} > C_T(\theta_{emb_{anticipe}})$ est vérifiée.

Les sorties des deux comparateurs 72 et 74 sont connectées aux bornes d'entrée d'une porte ET logique 75

dont la sortie 76 est transmise comme ordre de desserrage quand la sortie 76 est à l'état actif pour les freins 5 du véhicule.

On va maintenant décrire un autre mode de réalisation d'un estimateur de la caractéristique de couple transmis à la roue qui exploite un modèle paramétrique en fonction de la position de la pédale d'embrayage. L'estimateur de couple transmis pour maintenir le véhicule dans la côte comporte un générateur de couple transmis dont le signal de sortie est défini par la relation paramétrique :

$$C_{T_{MAX}} = \begin{vmatrix} 0 & si & \theta_{emb} \leq \theta_{kp} \\ c_0\left(\theta_{emb} - \theta_{kp.}\right)^{d_0} & si & \theta_{emb} > \theta_{kp} \end{vmatrix} , \qquad (4)$$

Où $c_0$ et $d_0$ sont des facteurs de forme et $\theta_{kp}$ est la position de léchage de l'embrayage qui est pris arbitrairement pour une valeur faible du degré d'enfoncement mesuré de la pédale d'embrayage. La fonction $C_{T_{MAX}}$ est composée d'une première fonction constante nulle, puis d'une second fonction de type puissance.

On conçoit que si deux points de mesure de couple $C_{T_{MAX}}$ étaient connus, soient $C_1$ et $C_2$ pour deux valeurs du degré d'enfoncement lors du début de la manoeuvre de la pédale d'enfoncement, soient $\theta_{kp}+A$ et $\theta_{kp}+2A$ ces degrés au delà du point de léchage, on aurait :

$$\begin{aligned} C_1 &= c_0 A^{d_0} \\ C_2 &= c_0 (2A)^{d_0} \end{aligned} , \text{ qui donnerait alors } \quad d_{0i} = \frac{\ln(C_1) - \ln(C_2)}{\ln(2)} \quad \text{ qui sont }$$

$$c_{0i} = \frac{A^{d_{0i}}}{C_1}$$

les deux identificateurs de la courbe d'embrayage recherchée.

Pour éviter d'effectuer des calculs relativement complexes, il est préféré dans un mode de réalisation de l'invention d'utiliser un identificateur de courbe d'embrayage qui comporte une mémoire contenant un ensemble de tables {$TABLE(d_0,c_0);c_0,d_0$} des valeurs de $C_{T_{MAX}}$ en fonction des premières valeurs du degré d'enfoncement de la pédale d'embrayage au moins. Les tables sont calculées pour les valeurs attendues des facteurs de forme $c_0$ et $d_0$. Chaque table est donc définie par son adresse exprimée par le couple de facteurs de forme $(c_0, d_0)$ et contient au moins deux valeurs du couple d'embrayage comme $C_1$ et $C_2$, pour deux valeurs du degré d'enfoncement prédéterminées par avance, comme $\theta_{kp}+A$ et $\theta_{kp}+2A$.

Le dispositif de l'invention comporte aussi un estimateur de couple d'embrayage qui produit à chaque instant, ou au moins lors de la phase de début d'embrayage, la valeur réellement appliquée par le moteur thermique aux roues du véhicule. Un tel estimateur de couple d'embrayage tient compte du régime de ralenti et des caractéristiques de la chaîne cinématique constituée entre les roues et le moteur thermique.

Lorsque le conducteur commence l'enfoncement de la pédale, un contrôleur électronique de l'identificateur de courbe d'embrayage, qui reçoit du capteur de degré d'enfoncement de la pédale d'embrayage les valeurs $\theta_{emb}$, et qui reçoit de l'estimateur de couple d'embrayage la valeur du couple d'embrayage qui lui correspond, exécute sur le premier point reçu $(\theta_{kp}+A, C_1)$ la sélection d'un sous-ensemble de tables $SEL\{TABLE(d_0,c_0),c_0,d_0\}$ de la mémoire préenregistrée de tables dans lesquelles se trouve ce premier point reçu. Puis, lorsque l'enfoncement de la pédale d'embrayage se poursuit, le contrôleur électronique reçoit un second point de la courbe d'embrayage caractérisant à l'instant donné l'état de l'embrayage, soit le second point $(\theta_{kp}+2A,C_2)$. Il commande alors la recherche dans lé sous-ensemble $SEL$ {$TABLE(d_0,c_0);c_0,d_0$} de tables préenregistrées de l'adresse de la table dont le second point correspond au mieux au second point reçu par le contrôleur, et cette adresse caractérise le couple des facteurs de forme $(c_{0i}, d_{0i})$ qui permet d'identifier la courbe d'embrayage réelle. Le contrôle du véhicule peut à partir de ce processus d'identification de la courbe d'embrayage affecter une valeur sûre du couple de maintien en pente pour un degré d'enfoncement de la pédale d'embrayage et toute grandeur de couple dérivée.

Dans un mode de réalisation, le dispositif de l'invention comporte un moyen pour estimer le rapport de transmission $r(b)$. L'estimateur de rapport de transmission (non représenté) comporte un moyen pour exécuter un test depuis les valeurs supérieures de b, qui est décrémenté, jusqu'à ce que le test suivant soit vrai :

$$\omega_r > \left[r(b) - 0.5 * (r(b) - r(b-1))\right]\omega_m$$

A cette fin, l'estimateur de rapport de transmission comporte aussi un moyen de test dont une première entrée reçoit le signal de vitesse de rotation des roues du véhicule $\omega_R$ produit par un capteur ou un estimateur convenable et disponible sur le bus 13 du véhicule et une seconde entrée reçoit le signal de vitesse de rotation du moteur 1 : $\omega_m$ produit par un capteur ou un estimateur convenable et disponible sur le bus 13 du véhicule. L'estimateur comporte ensuite une mémoire des rapports de boîte {r(b) ; b = 6 ..1} caractéristiques du véhicule lorsque les rapports de boîte sont descendus et la sortie de lecture de la mémoire est lue par un organe de calcul qui exécute l'opération :

$$r(b) - 0.5 * (r(b) - r(b-1)).$$

Le signal de sortie de l'organe de calcul est connecté à une entrée convenable du moyen de test qui reçoit aussi les deux vitesses de rotation précitées et place sa sortie à l'état actif quand le test est vérifié. Dans ce cas, l'estimateur de rapport de transmission transmet la valeur b et/ou r(b) en sortie sur le bus 13 du véhicule. Dans le cas contraire, un décrémenteur (non représenté) réduit la valeur de b d'une unité et applique cette valeur comme adresse de la mémoire pré enregistrée des rapports de boîte dans l'estimateur de rapport de transmission. La valeur suivante de la mémoire est alors adressée au moyen de test.

On remarque que le dispositif de l'invention est préférentiellement réalisé sous forme d'un programme enregistré et exécuté sur le calculateur du véhicule avec les interfaces qui ont été décrites ci-dessus.

## Revendications

**1.** Dispositif d'assistance aux manoeuvres en côte d'un véhicule, du genre comportant un groupe motopropulseur (1) connecté aux roues motrices par l'intermédiaire d'un embrayage (2) et d'une boîte de vitesses (3) dont les rapports peuvent être sélectionnés lors d'un découplage de la puissance motrice par débrayage, et enfin un système de freinage (5) dont au moins le desserrage peut être contrôlé, qui comporte:

■ un moyeu (6) pour estimer la pente dans laquelle le véhicule est engagé ;
■ un moyen (7) pour interpréter les commandes du conducteur et / ou d'un organe central de conduite (14) ;
■ un moyen (8) pour déterminer les caractéristiques instantanées de l'embrayage, qui produit une valeur ($C_T$) d'estimation du couple transmis ;
■ un moyen (9) connecté aux trois moyens précédents pour effectuer une commande de desserrage du système de freinage (5) ;
de sorte que le véhicule soit maintenu dans la pente lors de la manoeuvre,

**caractérisé en ce que** le moyen (9) pour effectuer une commande de desserrage des freins (5) produit un signal de sortie actif quand le couple transmis à la roue est supérieur à une valeur prédéterminée de couple de maintien dans la pente, et **en ce que** ce moyen (9) comporte un moyen pour produire une valeur prédéterminée de couple de maintien ($C_{Tmax}$) dans la pente.

**2.** Dispositif selon la revendication 1, **caractérisé en ce que** le moyen pour produire une valeur prédéterminée de couple de maintien ($C_{Tmax}$) comporte une mémoire de caractéristiques de couples transmis pour maintenir le véhicule dans la pente dont le signal de lecture est adressé par un signal de détection ($\theta_V$) produit par un capteur de pente.

**3.** Dispositif selon la revendication 2, **caractérisé en ce que** l'adressage de la mémoire dépend aussi d'un signal de mesure (m) de la masse du véhicule produit par un estimateur de masse du véhicule.

**4.** Dispositif selon l'une des revendications précédentes, **caractérisé en ce que** la mémoire de caractéristiques de couples transmis pour maintenir le véhicule dans la pente comporte un moyen de mise à jour des caractéristiques de couple transmis en fonction de l'usure et du vieillissement de l'embrayage.

**5.** Dispositif selon la revendication 4 **caractérisé en ce que** le moyen de mise à jour comporte un estimateur de couple transmis.

**6.** Dispositif selon la revendication 5, **caractérisé en ce que** l'estimateur de couple transmis comporte un moyen pour détecter un changement de rapport de boîte de vitesses.

**7.** Dispositif selon la revendication 6, **caractérisé en ce que** le moyen pour détecter un changement de rapport de boîte de vitesses comporte un moyen de détection d'une position haute, un moyen de détection d'une position basse d'embrayage, qui sont connectés à un capteur de degré d'enfoncement de la pédale d'embrayage, et un moyen pour détecter une séquence d'embrayages prédéterminée.

**8.** Dispositif selon la revendication 5, **caractérisé en ce que** l'estimateur de couple, transmis comporte un moyen d'estimation d'un point sur la caractéristique du couple transmis à l'aide d'une estimation du couple moyen à la roue.

**9.** Dispositif selon la revendication 8, **caractérisé en ce que** le moyen d'estimation d'un point sur la caractéristique du couple transmis comporte un moyen de calcul qui exécute l'opération : $\hat{C}_T = C_m - J_m\dot{\omega}_m$ qui fournit la valeur estimée du couple moteur transmis.

**10.** Dispositif selon la revendication 9, **caractérisé en ce que** le moyen d'estimation d'un point sur la caractéristique du couple transmis comporte aussi :

- un premier moyen de test (80) produisant un signal de test actif quand il n'y a pas de consommateurs en ligne, et qui indique que l'estimation du couple moteur est valide ;
- un second moyen de test (81) produisant un signal de test actif en phase de ré embrayage ;
- un moyen (82) pour estimer le rapport de transmission r(b) en phase d'embrayage (après l'instant 52, figure 5) ;

- un moyen de calcul (83) de la vitesse de glissement $\Delta\omega = \omega_m - \dfrac{\omega_R}{r(b)}$ de l'embrayage.

**11.** Dispositif selon la revendication 10, **caractérisé en ce que** le moyen d'estimation d'un point sur la caractéristique du couple transmis comporte aussi deux moyens de test, internes au moyen de validation (85), et qui exécutent respectivement les tests :

$$C_{TMIN_i} \leq \hat{C}_T \leq C_{TMAX_i}$$

$$\Delta\omega \leq \Delta\omega_{SEUIL} < 0$$

de sorte que, quand les deux moyens de test ont vérifié le respect des conditions, une borne de sortie convenable du moyen de validation (85) délivre un point capturé défini par:
$P_i = (\hat{C}_{Ti}, \theta_{embi})$, au cours d'un ré embrayage, les trois valeurs de seul $C_{TMINi}$, $C_{TMAXi}$ et $\Delta\omega_{SEUIL}$ étant enregistrées dans des mémoires permanentes du moyen de validation (85).

**12.** Dispositif selon la revendication 8, **caractérisé en ce que** l'estimateur de couple transmis comporte aussi un moyen pour réaliser une pluralité déterminée d'exécutions du moyen d'estimation d'un point sur la caractéristique du couple transmis de sorte qu'une mémoire reçoive une pluralité de points capturés pour représenter une mise à jour de la caractéristique d'embrayage.

**13.** Dispositif selon la revendication 12, **caractérisé en ce que** l'estimateur de couple transmis comporte aussi un moyen pour déclencher une nouvelle estimation de caractéristique de couple transmis lors de la vie du véhicule qui est actif notamment lors d'une opération de maintenance du véhicule, lors d'une , commande spécifique du conducteur, lors du passage à l'état actif d'un moyen détectant que la courbe identifiée de couple transmis n'est plus convenable.

**14.** Dispositif selon la revendication 11 ou 12, **caractérisé en ce que** l'estimateur de couple transmis comporte aussi un moyen pour filtrer les erreurs de modélisation et de mesures, qui comporte un outil pour produire une moyenne des positions des points capturés.

**15.** Dispositif selon l'une des revendications précédentes, **caractérisé en ce qu'**il comporte un moyen pour gérer la volonté du conducteur, afin d'anticiper la commande de desserrage des freins, de sorte que ce dernier intervienne à la position théorique de desserrage.

**16.** Dispositif selon l'une des revendications précédentes, **caractérisé en ce qu'**il comporte un moyen pour anticiper en tenant compte de l'activité du conducteur sur la pédale d'accélérateur.

**17.** Dispositif selon la revendication 15 ou 16, **caractérisé en ce qu'**il comporte un premier moyen (70) pour générer une valeur de seuil pour la position d'enfoncement de la pédale d'accélérateur en fonction du régime moteur.

**18.** Dispositif selon la revendication 17, **caractérisé en ce que** la moyen (70) exécute une fonction définie analytiquement par : $\theta_{acc_{SEUIL}} = f(\theta_V, N_m)$ dans laquelle les deux arguments sont la pente dans laquelle le véhicule est installé et le régime moteur.

**19.** Dispositif selon la revendication 18, **caractérisé en ce que** le générateur (70) comporte une mémoire d'une table à deux entrées selon la valeur de la pentue et le régime moteur produisant un signal de seuil fourni à une première entrée d'un comparateur (72) qui reçoit sur une seconde entrée le degré d'enfoncement de la pédale d'accélérateur et qui produit un signal de sortie actif si la condition : $\theta_{acc} \geq \theta_{acc_{SEUIL}}$ est vérifiée.

**20.** Dispositif selon la revendication 15 ou 16, **caractérisé en en ce qu'**il comporte un second moyen (71) pour produire un signal d'embrayage anticipé d'une durée ($\Delta T$) prédéterminée, enregistrée dans une mémoire du dispositif d'assistance, ledit moyen générateur (71) exécutant une fonction : $\theta_{emb_{enfitipt}} = \theta_{eab} + \Delta T \times \theta'_{emb}$ dans laquelle la fonction $\theta'_{emb}$ est la dérivée instantanée de la position d'enfoncement de la pédale d'embrayage.

**21.** Dispositif selon la revendication 20, **caractérisé en ce qu'**il comporte un moyen pour produire le paramètre ($\Delta T$) estimé en fonction de la pente dans laquelle le véhicule est maintenu.

**22.** Dispositif selon la revendication 20 ou 21, **caractérisé en ce que** le signal représentatif du degré d'enfoncement anticipé de la pédale d'embrayage est transmis à l'entrée d'adressage d'un générateur (73) produisant à sa sortie une valeur représentative du couple transmis à la roue pour maintenir le véhicule en côte sous la forme d'une fonction $C_T(\theta_{emb_{mentre}})$ qui est transmise à une entrée d'un comparateur (74) dont une autre entrée est connectée à la sortie de l'estimateur de couple transmis, de sorte que le comparateur (74) place sa sortie à l'état actif si la conditions $C_{TD} > C_T(\theta_{emb_{anticipé}})$ est vérifiée.

**23.** Dispositif selon les revendications 19 et 22, **caractérisé en ce que** lés sorties des deux comparateurs (72) et (74) sont connectées aux bornes d'entrée d'une porte ET logique (75) dont la sortie (76) est transmise comme ordre de desserrage quand la sortie (76) est à l'état actif pour les freins (5).

**24.** Dispositif selon la revendication 5, **caractérisé en ce que** l'estimateur de couple transmis comporte un générateur de couple transmis dont le signal de sortie est défini par la relation paramétrique :

$$C_{T_{Max}} = \begin{vmatrix} 0 & si & \theta_{emb} \leq \theta_{kp} \\ c_0(\theta_{emb} - \theta_{kp})^{d_0} & si & \theta_{emb} > \theta_{kp} \end{vmatrix},$$

où $c_0$ et $d_0$ sont des facteurs de forme issus d'un identificateur de courbe d'embrayage qui travaille au voisinage d'un point prédéterminé de léchage (kp) de l'embrayage.

**25.** Dispositif selon la revendication 24, **caractérisé en ce que** l'identificateur de courbe d'embrayage comporte

■ une mémoire préenregistrée de tables de points d'embrayage prédéterminés pour un ensemble de valeurs de facteurs de forme, l'adresse d'une table prédéterminée correspondant à un couple de facteurs de forme de valeurs prédéterminées ;
■ un estimateur de couple d'embrayage au moins pour deux états d'embrayage au voisinage du point de léchage ;
■ un capteur de degré d'enfoncement de la pédale d'embrayage pour indiquer au moins un premier et un second état d'embrayage après le point de léchage ; et
■ un contrôleur électronique qui comporte :

■ des moyens pour rechercher lors du premier état d'embrayage après le point de léchage, et pour une estimation produite par l'estimateur de couple d'embrayage dans ledit premier état d'embrayage, un sous-ensemble des tables de points d'embrayage dont le premier point correspond audit premier état d'embrayage,

■ des moyens pour rechercher lors du second état d'embrayage après le premier état d'embrayage et pour une estimation produite par l'estimateur de couple d'embrayage dans ledit second état d'embrayage la table de points d'embrayage appartenant audit sous-ensemble dont le second point est le plus proche ; et

■ des moyens pour fournir à sa sortie un couple ($c_{0i}$, $d_{0i}$) de facteurs de forme associé à la table trouvée comme identification de la courbe d'embrayage.

26. Dispositif selon la revendication 6 ou 25, **caractérisé en ce que** le moyen pour détecter un changement de rapport de boîte de vitesses comporte un moyen pour estimer le rapport de transmission $r(b)$ qui comporte un moyen pour exécuter un test depuis les valeurs supérieures de b, qui est décrémenté, jusqu'à ce que le test suivant soit vrai : $\omega_r > [r(b)-0.5*(r(b)-r(b-1))]\omega_m$.

27. Dispositif selon la revendication 26, **caractérisé en ce que** l'estimateur de rapport de transmission comporte aussi un moyen de test dont une première entrée reçoit le signal de vitesse de rotation des roues du véhicule ($\omega_R$) produit par un capteur ou un estimateur convenable et disponible sur le bus (13) du véhicule et une seconde entrée reçoit le signal de vitesse de rotation du moteur (1) : ($\omega_m$) produit par un capteur ou un estimateur convenable et disponible sur le bus (13) du véhicule ; **en ce que** l'estimateur comporte ensuite une mémoire des rapports de boîte {r(b) ; b = 6 ..1} caractéristiques du véhicule lorsque les rapports de boîte sont descendus et la sortie de lecture de la mémoire est lue par un organe de calcul qui exécute l'opération : $r(b)-0.5*(r(b)-r(b-1))$ ; **en ce que** le signal de sortie de l'organe de calcul est connecté à une entrée convenable du moyen de test qui reçoit aussi les deux vitesses de rotation précitées et place sa sortie à l'état actif quand le test est vérifié, de sorte que, dans ce cas, l'estimateur de rapport de transmission transmet la valeur b et/ou r(b) en sortie sur le bus (13) du véhicule, et de sorte que, dans le cas contraire, un décrémenteur réduit la valeur de b d'une unité et applique cette valeur comme adresse de la mémoire pré enregistrée des rapports de boîte dans l'estimateur de rapport de transmission, la valeur suivante de la mémoire est alors adressée au moyen de test.

28. Dispositif selon l'une des revendications précédentes, **caractérisé en ce que** les freins (5) coopèrent avec un dispositif électrique de freinage au parking.

29. Dispositif selon la revendication 28, **caractérisé en ce que** le dispositif électrique de freinage comporte un boîtier (20), un contrôleur (21) connecté au bus de signalisation (13), le dispositif (15, Figure 1) étant un organe de commande travaillant selon la protocole du bus (13) et le dispositif électrique (20) de freinage au parking étant un organe commandé travaillant selon le protocole du bus (13).

30. Dispositif selon la revendication 29, **caractérisé en ce que** le contrôleur (21) est connecté au bus (13) par un port d'entrée / sortie B et des moyens pour recevoir des données représentatives de la force de serrage appliquée aux freins mécaniques (26, 27) du système de freinage (5), et mesurée par un capteur de force (24) interposé entre un moteur électrique (23) monté dans le boîtier (20) et un convertisseur mécanique (25) dont un levier articulé de sortie permet de mobiliser deux câbles de commande des freins: (26, 27) selon une force de serrage déterminée par le couple moteur appliqué par le moteur électrique (23) ;

**en ce que** le moteur électrique (23) est alimenté depuis la batterie du véhicule par l'intermédiaire d'un circuit de pilotage (22) qui est réalisé de manière à commander le courant électrique traversant le moteur électrique, ce courant électrique étant calculé et contrôlé par le contrôleur (20) dont un port de sortie A est connecté aux entrées convenables du circuit de pilotage ou pilote (22).

31. Dispositif selon l'une des revendications précédentes, **caractérisé en ce qu'**il est réalisé sous forme d'un programme enregistré et exécuté sur le calculateur du véhicule.

## Claims

1. Device for assisting a vehicle with maneuvers on a hill, this vehicle being of the kind comprising a power plant (1) connected to the driven wheels via a clutch (2) and a gearbox (3) the gear ratios of which can be selected when the motive power is uncoupled by disengaging the clutch, and finally a braking system (5) at least the release of which may be controlled, and which comprises:

• a means (6) for estimating the gradient of the slope on which the vehicle lies;

• a means (7) for interpreting the commands of the driver and/or of a central control unit (14);

• a means (8) for determining the instantaneous characteristics of the clutch, which means produces a value ($\hat{C}_T$) that is an estimate of the transmitted torque;

• a means (9) connected to the aforementioned three means for commanding the release of the braking system (5);

so that the vehicle is held on the slope during the manoeuvre,

**characterized in that** the means (9) for commanding release of the brakes (5) produces an active output signal when the torque transmitted to the wheel is greater than a predetermined torque value for holding the vehicle on the slope, and **in that** this means (9) comprises a means for producing a predetermined holding torque value ($C_{Tmax}$) for the torque that will hold the vehicle on the slope.

2. Device according to Claim 1, **characterized in that** the means for producing a predetermined holding torque value ($C_{Tmax}$) comprises a memory filled with characteristics of transmitted torques for holding the vehicle on a slope, the read signal for which is addressed using a detection signal ($\theta_v$) produced by a gradient sensor.

3. Device according to Claim 2, **characterized in that** the addressing of the memory is also dependent on a measurement signal (m) that measures the mass of the vehicle and is produced by a vehicle mass estimator.

4. Device according to one of the preceding claims, **characterized in that** the memory full of characteristics of transmitted torques for holding the vehicle on the slope comprises a means of updating the transmitted-torque characteristics according to the wear and ageing of the clutch.

5. Device according to Claim 4, **characterized in that** the updating means comprises a transmitted-torque estimator.

6. Device according to Claim 5, **characterized in that** the transmitted-torque estimator comprises a means for detecting a change in gear ratio of the gearbox.

7. Device according to Claim 6, **characterized in that** the means of detecting a change in gear ratio of the gearbox comprises a means of detecting that the clutch is in a high position, a means of detecting that the clutch is in a low position, these two means being connected to a sensor that senses the extent to which the clutch pedal is depressed, and a means for detecting a predetermined clutch sequence.

8. Device according to Claim 5, **characterized in that** the transmitted-torque estimator comprises a means of estimating a point on the characteristic curve of the transmitted torque using an estimate of the mean torque at the wheel.

9. Device according to Claim 8, **characterized in that** the means of estimating a point on the characteristic curve of the transmitted torque comprises a calculation means which performs the operation: $\hat{C}_T = C_m - J_m \omega_m$ which provides the estimated value of the driving torque transmitted.

10. Device according to Claim 9, **characterized in that** the means of estimating a point on the characteristic curve of the transmitted torque also comprises:

- a first test means (80) that produces an active test signal when there are no consumers online and which indicates that the estimated driving torque is valid;
- a second test means (81) that produces an active test signal in the clutch re-engagement phase;
- a means (82) for estimating the transmission ratio r(b) during the clutch engagement phase (after the time 52, Figure 5);
- a calculation means (83) for calculating the rate of slip

$$\Delta\omega_m = \omega_m - \frac{\omega_R}{r(b)}$$

of the clutch.

**11.** Device according to Claim 10, **characterized in that** the means of estimating a point on the characteristic curve of the transmitted torque also comprises two test means, internal to the validation means (85), and which respectively carry out the following tests:

$$C_{TMIN_i} \leq \hat{C}_T \leq C_{TMAX_i}$$

$$\Delta\omega \leq \Delta\omega_{\text{SEUIL}} < 0$$

so that, when the two test means have checked that the conditions are met, an appropriate output terminal of the validation means (85) delivers a captured point defined by: $P_i=(\hat{C}_{Ti}, \theta_{embi})$, during reengagement, the three threshold values $C_{TMINi}$ $C_{TMAXi}$ and $\Delta\omega_{SEUIL}$, being recorded in non-volatile memories of the validation means (85).

**12.** Device according to Claim 8, **characterized in that** the transmitted-torque estimator also comprises a means for carrying out a determined plurality of runnings of the means of estimating a point on the characteristic curve of the transmitted torque so that a memory can received a plurality of captured points to represent an update of the clutch characteristic curve.

**13.** Device according to Claim 12, **characterized in that** the transmitted-torque estimator also comprises a means for initiating a fresh estimate of transmitted-torque characteristics during the life of the vehicle which is active particularly during a vehicle maintenance operation, upon specific instruction from the driver, when a means that detects that the identified transmitted-torque curve is no longer appropriate switches to an active state.

**14.** Device according to Claim 11 or 12, **characterized in that** the transmitted-torque estimator also comprises a means for filtering out modelling and measurement errors, which means comprises a tool for averaging the positions of the captured points.

**15.** Device according to one of the preceding claims, **characterized in that** it comprises a means for managing the driver's wishes so as to anticipate the command to release the brakes so that this can occur at the theoretical brake release position.

**16.** Device according to one of the preceding claims, **characterized in that** it comprises an anticipating means that takes account of the activity of the driver on the accelerator pedal.

**17.** Device according to Claim 15 or 16, **characterized in that** it comprises a first means (70) for generating a threshold value for the position to which the accelerator pedal is depressed as a function of engine speed.

**18.** Device according to Claim 17, **characterized in that** the means (70) executes a function defined analytically by: $\theta_{accSEUIL}=f(\theta_v, N_m)$ in which the two arguments are the gradient of the slope on which the vehicle lies, and the engine speed.

**19.** Device according to Claim 18, **characterized in that** the generator (70) comprises memory with a table with two inputs according to the value of the gradient of the slope and the engine speed producing a threshold signal supplied to a first input of a comparator (72) which, on a second input, receives the extent to which the accelerator pedal is depressed and which produces an active output signal if the condition: $\theta_{acc} \geq \theta_{accSEUIL}$ is satisfied.

**20.** Device according to Claim 15 or 16, **characterized in that** it comprises a second means (71) for producing a clutch signal anticipated by a predetermined length of time ($\Delta T$) recorded in a memory of the assistance device, the said generator means (71) executing a function: $\theta_{emb_{anticipé}} = \theta_{emb} + \Delta T \times \theta'_{emb}$ in which the function $\theta'_{emb}$ is the instantaneous derivative of the position to which the clutch pedal is depressed.

**21.** Device according to Claim 20, **characterized in that** it comprises a means for producing the parameter ($\Delta T$) estimated as a function of the gradient of the slope on which the vehicle is being held.

**22.** Device according to Claim 20 or 21, **characterized in that** the signal that represents the anticipated extent to which the clutch pedal is depressed is transmitted to the address input of a generator (73) which, on its output, produces a value representative of the torque transmitted to the wheel so as to hold the vehicle on a hill, in the form of a function $C_T(\theta_{emb_{anticipé}})$ which is transmitted to one input of a comparator (74) another input of which is connected to the output of the transmitted-torque estimator so that the comparator (74) switches its output to the active state if the condition $C_{TD} > C_T(\theta_{emb_{anticipé}})$ is satisfied.

**23.** Device according to Claims 19 and 22, **characterized in that** the outputs of the two comparators (72) and (74) are connected to the input terminals of a logic AND gate (75) the output (76) of which is transmitted by way of a brake release command to the brakes (5) when the output (76) is in the active state.

**24.** Device according to Claim 5, **characterized in that** the transmitted-torque estimator comprises a transmitted-torque generator the output signal of which is defined by the parametric relationship:

$$C_{T_{\max}} = \left|\begin{array}{ll} 0 & if\ \theta_{emb} \leq \theta_{kp} \\ c_0(\theta_{emb} - \theta_{kp})^{d_0} & if\ \theta_{emb} \rangle \theta_{kp} \end{array}\right.$$

where $c_0$ and $d_0$ are form factors taken from an identifier of a curve of a clutch operating near a predetermined kiss point (kp) of the clutch.

**25.** Device according to Claim 24, **characterized in that** the clutch curve identifier comprises

- a memory pre-recorded with tables of predetermined clutch points for a set of values of form factors, the address of a predetermined table corresponding to a pair of form factors of predetermined values;
- a clutch torque estimator estimating clutch engagement torque for at least at two clutch-engagement states near the kiss point;
- a sensor that senses the extent to which the clutch pedal is depressed so as to indicate at least a first clutch-engagement state and a second clutch-engagement state after the kiss point; and
- an electronic controller comprising:

  - means for, during the first clutch-engagement state after the kiss point, and for an estimate produced by the clutch-engagement torque estimator in the said first clutch-engagement state, searching a subset of the tables of clutch points the first point of which corresponds to the said first clutch-engagement state;
  - means for, during the second clutch-engagement state after the first clutch-engagement state and for an estimate produced by the clutch-engagement torque estimator in the said second clutch-engagement state, searching the table of clutch-engagement points belonging to the said subset which has the closest second point; and
  - means for providing on output a pair ($c_{0i}$, $d_{0i}$) of form factors associated with the table found to identify the clutch curve.

**26.** Device according to Claim 6 or 25, **characterized in that** the means for detecting a change in gear ratio in the gearbox comprises a means for estimating the transmission ratio r(b) that comprises a means for running a test from higher values of b, which is decremented until the following test holds true: $\omega_r > [r(b) - 0.5 \times (r(b) - r(b-1))]\omega_m$.

**27.** Device according to Claim 26, **characterized in that** the transmission ratio estimator also comprises a test means a first input of which receives the signal characterizing the rotational speed of the wheels of the vehicle ($\omega_R$) produced by a sensor or an appropriate estimator and available on the vehicle bus (13) and a second input of which receives the signal characterizing the rotational speed of the engine (1): ($\omega_m$) produced by a sensor or an appropriate estimator and available on the vehicle bus (13); **in that** the estimator then comprises a memory containing gear ratios {r(b); b=6,..., 1} characteristic of the vehicle when downshifting through the gear ratios and the read output of the memory is read by a calculation unit which performs the operation: r(b)-0.5×(r(b)-r(b-1)); and **in that** the output signal from the calculation unit is connected to an appropriate input of the test means which also receives the aforementioned two rotational speeds and switches its output to the active state when the test is satisfied, such that, in this case, the transmission ratio estimator transmits the value b and/or r(b) at output on the vehicle bus (13) and such that, if not, a decrementor reduces the value of b by 1 unit and applies this value as an address to the memory prerecorded with the gear box ratios in the transmission ratio estimator, and the next value in the memory is then addressed to the test means.

28. Device according to one of the preceding claims, **characterized in that** the brakes (5) collaborate with an electric braking device when the vehicle is parked.

29. Device according to Claim 28, **characterized in that** the electric braking device comprises a unit (20), a controller (21) connected to the signaling bus (13), the device (15, Figure 1) being the control unit operating in accordance with the protocol of the bus (13) and the electric parking brake device (20) being a controlled unit operating in accordance with the protocol of the bus (13).

30. Device according to Claim 29, **characterized in that** the controller (21) is connected to the bus (13) by an input/ output port B and means for receiving data representative of the brake-application force applied to the mechanical brakes (26, 27) of the braking system (5) and measured by a force sensor (24) inserted between an electric motor (23) mounted in the unit (20) and a mechanical converter (25) an articulated output lever of which can be used to mobilize two brake control cables (26, 27) with a brake-application force that is determined by the motor torque applied by the electric motor (23);
and **in that** the electric motor (23) is powered from the vehicle battery via a control circuit (22) which is created in such a way as to control the electric current passing through the electric motor, this electric current being calculated and controlled by the controller (20) an output port A of which is connected to the appropriate inputs of the control circuit or controller (22).

31. Device according to one of the preceding claims, **characterized in that** it is produced in the form of a program recorded in and run by the vehicle management computer.

## Patentansprüche

1. Vorrichtung zur Unterstützung der Manöver eines Fahrzeugs am Hang, von der Art, die eine Antriebseinheit (1), die mit den gelenkten Rädern über eine Kupplung (2) und ein Schaltgetriebe (3) verbunden ist, dessen Gänge bei einem Entkoppeln der Motorleistung durch Auskuppeln gewählt werden können, und schließlich ein Bremssystem (5) aufweist, bei dem zumindest das Lösen gesteuert werden kann, die aufweist:

   • eine Einrichtung (6), um die Hangneigung zu schätzen, in der das Fahrzeug sich befindet;
   • eine Einrichtung (7), um die Befehle des Fahrers und/oder eines zentralen Lenkorgans (14) zu interpretieren;
   • eine Einrichtung (8), um die augenblicklichen Kennlinien der Kupplung zu bestimmen, die einen Schätzwert ($\hat{C}_T$) des übertragenen Drehmoments erzeugt;
   • eine Einrichtung (9), die mit den drei vorhergehenden Einrichtungen verbunden ist, um eine Lösesteuerung des Bremssystems (5) durchzuführen;
   so dass das Fahrzeug während des Manövers in der Hangneigung gehalten wird,

   **dadurch gekennzeichnet, dass** die Einrichtung (9) zur Durchführung einer Lösesteuerung der Bremsen (5) ein aktives Ausgangssignal erzeugt, wenn das auf das Rad übertragene Drehmoment über einem vorbestimmten Haltemomentwert in der Hangneigung liegt, und dass diese Einrichtung (9) eine Einrichtung aufweist, um einen vorbestimmten Haltemomentwert ($C_{Tmax}$) in der Hangneigung zu erzeugen.

2. Vorrichtung nach Anspruch 1, **dadurch gekennzeichnet, dass** die Einrichtung zur Erzeugung eines vorbestimmten Haltemomentwerts ($C_{Tmax}$) einen Speicher von Kennlinien übertragener Drehmomente, um das Fahrzeug in der Hangneigung zu halten, aufweist, dessen Lesesignal von einem Erfassungssignal ($\theta_v$) angesteuert wird, das von einem Hangneigungssensor erzeugt wird.

3. Vorrichtung nach Anspruch 2, **dadurch gekennzeichnet, dass** die Ansteuerung des Speichers auch von einem Messsignal (m) der Masse des Fahrzeugs abhängt, das von einer Schätzfunktion der Masse des Fahrzeugs erzeugt wird.

4. Vorrichtung nach einem der vorhergehenden Ansprüche, **dadurch gekennzeichnet, dass** der Speicher von Kennlinien übertragener Drehmomente, um das Fahrzeug in der Hangneigung zu halten, eine Einrichtung zur Aktualisierung der Kennlinien eines übertragenen Drehmoments in Abhängigkeit von der Abnutzung und der Alterung der Kupplung aufweist.

**5.** Vorrichtung nach Anspruch 4, **dadurch gekennzeichnet, dass** die Aktualisierungseinrichtung eine Schätzfunktion eines übertragenen Drehmoments aufweist.

**6.** Vorrichtung nach Anspruch 5, **dadurch gekennzeichnet, dass** die Schätzfunktion eines übertragenen Drehmoments eine Einrichtung zur Erfassung eines Getriebegangwechsels aufweist.

**7.** Vorrichtung nach Anspruch 6, **dadurch gekennzeichnet, dass** die Einrichtung zur Erfassung eines Getriebegangwechsels eine Einrichtung zur Erfassung einer hohen Stellung, eine Einrichtung zur Erfassung einer niedrigen Kupplungsstellung, die mit einem Sensor für den Eindrückgrad des Kupplungspedals verbunden sind, und eine Einrichtung aufweist, um eine vorbestimmte Folge von Kupplungsvorgängen zu erfassen.

**8.** Vorrichtung nach Anspruch 5, **dadurch gekennzeichnet, dass** die Schätzfunktion eines übertragenen Drehmoments eine Einrichtung zur Schätzung eines Punkts auf der Kennlinie des übertragenen Drehmoments mit Hilfe einer Schätzung des mittleren Drehmoments am Rad aufweist.

**9.** Vorrichtung nach Anspruch 8, **dadurch gekennzeichnet, dass** die Einrichtung zur Schätzung eines Punkts auf der Kennlinie des übertragenen Drehmoments eine Recheneinrichtung aufweist, die die Operation: $\hat{CT} = C_{m\text{GESCHÄTZT}} - J_m\dot{\omega}_m$ ausführt, die den geschätzten Wert des übertragen Motordrehmoments liefert.

**10.** Vorrichtung nach Anspruch 9, **dadurch gekennzeichnet, dass** die Einrichtung zur Schätzung eines Punkts auf der Kennlinie des übertragenen Drehmoments auch aufweist:

- eine erste Testeinrichtung (80), die ein aktives Testsignal erzeugt, wenn keine Verbraucher verbunden sind, und die anzeigt, dass die Schätzung des Motordrehmoments gültig ist;
- eine zweite Testeinrichtung (81), die in der Phase des erneuten Kuppelns ein aktives Testsignal liefert;
- eine Einrichtung (82), um das Übersetzungsverhältnis r(b) in der Kupplungsphase (nach dem Augenblick 52, Figur 5) zu schätzen;

- eine Einrichtung (83) zur Berechnung der Gleitgeschwindigkeit $\Delta\omega = \omega_m - \dfrac{\omega_R}{r(b)}$ der Kupplung.

**11.** Vorrichtung nach Anspruch 10, **dadurch gekennzeichnet, dass** die Einrichtung zur Schätzung eines Punkts auf der Kennlinie des übertragenen Drehmoments auch zwei Testeinrichtungen innerhalb der Validierungseinrichtung (85) aufweist, die je die folgenden Tests durchführen:

$$C_{\text{TMIN}_i} \leq \hat{C}_T \leq C_{\text{TMAX}_i}$$

$$\Delta\omega \leq \Delta\omega_{\text{SCHWELLE}} < 0$$

so dass, wenn die zwei Testeinrichtungen die Beachtung der Bedingungen überprüft haben, eine geeignete Ausgangsklemme der Validierungseinrichtung (85) einen erfassten Punkt liefert, der definiert wird durch: $P_i = (\hat{C}_{Ti}, \theta_{\text{Kuppl}_i})$, während eines erneuten Kuppelns, wobei die drei Schwellwerte $C_{\text{TMINi}}$, $C_{\text{TMAXi}}$ und $\Delta\omega_{\text{SCHWELLE}}$ in Permanent-Speichern der Validierungseinrichtung (85) aufgezeichnet werden.

**12.** Vorrichtung nach Anspruch 8, **dadurch gekennzeichnet, dass** die Schätzfunktion eines übertragenen Drehmoments auch eine Einrichtung aufweist, um eine bestimmte Vielzahl von Ausführungen der Schätzungseinrichtung eines Punkts auf der Kennlinie des übertragenen Drehmoments durchzuführen, so dass ein Speicher mehrere erfasste Punkte empfängt, um eine Aktualisierung der Kupplungskennlinie darzustellen.

**13.** Vorrichtung nach Anspruch 12, **dadurch gekennzeichnet, dass** die Schätzfunktion eines übertragenen Drehmoments auch eine Einrichtung zum Auslösen einer neuen Schätzung einer Kennlinie eines übertragenen Drehmoments während der Lebensdauer des Fahrzeugs aufweist, die insbesondere während eines Wartungsvorgangs des Fahrzeugs, bei einem spezifischen Befehl des Fahrers, beim Übergang in den aktiven Zustand einer Einrichtung, die erfasst, dass die identifizierte Kurve eines übertragenen Drehmoments nicht mehr geeignet ist, aktiv ist.

**14.** Vorrichtung nach Anspruch 11 oder 12, **dadurch gekennzeichnet, dass** die Schätzfunktion eines übertragenen Drehmoments auch eine Einrichtung aufweist, um die Modellisierungs- und Messfehler zu filtern, die ein Werkzeug aufweist, um einen Mittelwert der Positionen der erfassten Punkte zu erzeugen.

**15.** Vorrichtung nach einem der vorhergehenden Ansprüche, **dadurch gekennzeichnet, dass** sie eine Einrichtung aufweist, um den Willen des Fahrers zu verwalten, um den Befehl des Lösens der Bremsen vorwegzunehmen, damit dieser letztere in der theoretischen Lösungsposition eingreift.

**16.** Vorrichtung nach einem der vorhergehenden Ansprüche, **dadurch gekennzeichnet, dass** sie eine Einrichtung des Vorwegnehmens unter Berücksichtigung der Aktivität des Fahrers auf dem Gaspedal aufweist.

**17.** Vorrichtung nach Anspruch 15 oder 16, **dadurch gekennzeichnet, dass** sie eine erste Einrichtung (70) aufweist, um einen Schwellwert für die Eindrückposition des Gaspedals in Abhängigkeit von der Motordrehzahl zu erzeugen.

**18.** Vorrichtung nach Anspruch 17, **dadurch gekennzeichnet, dass** die Einrichtung (70) eine Funktion ausführt, die analytisch definiert wird durch: $\theta_{GaspSCHWELIE} = f(\theta_v, N_m)$, in der die zwei Argumente die Hangneigung, in der sich das Fahrzeug befindet, und die Motordrehzahl sind.

**19.** Vorrichtung nach Anspruch 18, **dadurch gekennzeichnet, dass** der Generator (70) einen Speicher einer Tabelle mit zwei Eingängen gemäß dem Wert der Hangneigung und der Motordrehzahl hat, der ein Schwellensignal erzeugt, das an einen ersten Eingang eines Komparators (72) geliefert wird, der an einem zweiten Eingang den Eindrückgrad des Gaspedals empfängt und der ein aktives Ausgangssignal erzeugt, wenn die Bedingung: $\theta_{Gasp} \geq \theta_{GaspSCHWELLE}$ bestätigt ist.

**20.** Vorrichtung nach Anspruch 15 oder 16, **dadurch gekennzeichnet, dass** sie eine zweite Einrichtung (71) aufweist, um ein vorweggenommenes Kupplungssignal einer vorbestimmten Dauer ($\Delta T$) zu erzeugen, die in einem Speicher der Unterstützungsvorrichtung gespeichert ist, wobei die Erzeugungseinrichtung (71) eine Funktion: $\theta_{Kupplvorweggenonmen} = \theta_{Kuppl} + \Delta Tx\theta'_{Kuppl}$ ausübt, in der die Funktion $\theta'_{Kuppl}$ die augenblickliche Ableitung der Eindrückstellung des Kupplungspedals ist.

**21.** Vorrichtung nach Anspruch 20, **dadurch gekennzeichnet, dass** sie eine Einrichtung aufweist, um den geschätzten Parameter ($\Delta T$) in Abhängigkeit von der Hangneigung zu erzeugen, in der das Fahrzeug gehalten wird.

**22.** Vorrichtung nach Anspruch 20 oder 21, **dadurch gekennzeichnet, dass** das für den vorweggenommenen Eindrückgrad des Kupplungspedals repräsentative Signal an den Ansteuereingang eines Generators (73) übertragen wird, der an seinem Ausgang einen für das auf das Rad übertragene Drehmoment, um das Fahrzeug am Hang zu halten, repräsentativen Wert in Form einer Funktion $C_T(\theta_{KUPPLvorweggenommen})$ erzeugt, die an einen Eingang eines Komparators (74) übertragen wird, von dem ein anderer Eingang mit dem Ausgang der Schätzfunktion eines übertragenen Drehmoments verbunden ist, so dass der Komparator (74) seinen Ausgang in den aktiven Zustand versetzt, wenn die Bedingung $C_{TD} > C_T(\theta_{Kupplvorweggenommen})$ bestätigt ist.

**23.** Vorrichtung nach den Ansprüchen 19 und 22, **dadurch gekennzeichnet, dass** die Ausgänge der zwei Komparatoren (72) und (74) mit den Eingangsklemmen eines logischen UND-Glieds (75) verbunden sind, dessen Ausgangssignal (76) als Lösebefehl übertragen wird, wenn der Ausgang (76) im aktiven Zustand für die Bremsen (5) ist.

**24.** Vorrichtung nach Anspruch 5, **dadurch gekennzeichnet, dass** die Schätzfunktion eines übertragenen Drehmoments einen Generator eines übertragenen Drehmoments aufweist, dessen Ausgangssignal von der parametrischen Beziehung:

$$C_{T_{MAX}} = \begin{cases} 0 & \text{wenn } \theta_{Kuppl} \leqslant \theta_{kp} \\ c_0 \left( \theta_{Kuppl} - \theta_{kp} \right)^{d_0} & \text{wenn } \theta_{Kuppl} > \theta_{kp} \end{cases}$$

definiert wird, in der $c_0$ und $d_0$ Formfaktoren sind, die von einem Kupplungskurvenidentifizierer stammen, der in der Nähe eines vorbestimmten Schleifpunkts (kp) der Kupplung arbeitet.

**25.** Vorrichtung nach Anspruch 24, **dadurch gekennzeichnet, dass** der Kupplungskurvenidentifizierer aufweist

  • einen voraufgezeichneten Speicher von Tabellen vorbestimmter Kupplungspunkte für eine Einheit von Werten von Formfaktoren, wobei die Adresse einer vorbestimmten Tabelle einem Paar von Formfaktoren vorbestimmter Werte entspricht;
  • eine Schätzfunktion eines Kupplungsmoments mindestens für zwei Kupplungszustände in der Nähe des Schleifpunkts;
  • einen Sensor des Eindrückgrads des Kupplungspedals, um mindestens einen ersten und einen zweiten Kupplungszustand nach dem Schleifpunkt anzuzeigen; und
  • ein elektronisches Steuergerät, das aufweist:

    • Einrichtungen, um im ersten Kupplungszustand nach dem Schleifpunkt, und für eine von der Schätzfunktion eines Kupplungsmoments im ersten Kupplungszustand erzeugte Schätzung, eine Untereinheit von Tabellen von Kupplungspunkten zu suchen, deren erster Punkt dem ersten Kupplungszustand entspricht,
    • Einrichtungen, um im zweiten Kupplungszustand nach dem ersten Kupplungszustand, und für eine von der Schätzfunktion eines Kupplungsmoments im zweiten Kupplungszustand erzeugte Schätzung, die Tabelle von Kupplungspunkten zu suchen, die zu der Untereinheit gehört, deren zweiter Punkt der nächste ist; und
    • Einrichtungen, um an seinem Ausgang ein Paar $(c_{0i}, d_{0i})$ von Formfaktoren zu liefern, das der gefundenen Tabelle als Identifikation der Kupplungskurve zugeordnet ist.

**26.** Vorrichtung nach Anspruch 6 oder 25, **dadurch gekennzeichnet, dass** die Einrichtung zur Erfassung eines Getriebegangwechsels eine Einrichtung aufweist, um das Übersetzungsverhältnis r(b) zu schätzen, die eine Einrichtung aufweist, um einen Test ausgehend von den Werten höher als b auszuführen, der dekrementiert wird, bis der folgende Test richtig ist: $\omega_r > [r(b)-0.5*(r(b)-r(b-1))]\omega_m$.

**27.** Vorrichtung nach Anspruch 26, **dadurch gekennzeichnet, dass** die Übersetzungsverhältnis-Schätzfunktion auch eine Testeinrichtung aufweist, von der ein erster Eingang das Drehgeschwindigkeitssignal der Räder des Fahrzeugs $(\omega_R)$ empfängt, das von einem Sensor oder einer Schätzfunktion erzeugt wird, der (die) geeignet und auf dem Bus (13) des Fahrzeugs verfügbar ist, und ein zweiter Eingang das Drehgeschwindigkeitssignal des Motors (1): $(\omega_m)$ empfängt, das von einem Sensor oder von einer Schätzfunktion erzeugt wird, der (die) geeignet und auf dem Bus (13) des Fahrzeugs verfügbar ist; dass die Schätzfunktion anschließend einen Speicher der das Fahrzeug kennzeichnenden Getriebegänge $\{r(b); b = 6 .. 1\}$ aufweist, wenn die Getriebegänge heruntergeschaltet werden und der Leseausgang des Speichers von einem Rechenorgan gelesen wird, das die Operation: r(b)-0.5*(r(b)-r(b-1)) ausführt; dass das Ausgangssignal des Rechenorgans mit einem geeigneten Eingang der Testeinrichtung verbunden ist, die auch die zwei oben erwähnten Drehgeschwindigkeiten empfängt und ihren Ausgang in den aktiven Zustand versetzt, wenn der Test bestätigt wird, so dass in diesem Fall die Schätzfunktion eines Übersetzungsverhältnisses den Wert b und/oder r(b) am Ausgang auf den Bus (13) des Fahrzeugs überträgt, und so dass im gegenteiligen Fall ein Dekrementierer den Wert von b um eine Einheit reduziert und diesen Wert als Adresse des voraufgezeichneten Speichers der Getriebegänge in der Schätzfunktion eines Übersetzungsverhältnisses anwendet; der folgende Wert des Speichers wird dann an die Testeinrichtung gesendet.

**28.** Vorrichtung nach einem der vorhergehenden Ansprüche, **dadurch gekennzeichnet, dass** die Bremsen (5) mit einer elektrischen Parkbremsvorrichtung zusammenwirken.

**29.** Vorrichtung nach Anspruch 28, **dadurch gekennzeichnet, dass** die elektrische Bremsvorrichtung ein Gehäuse (20) und ein mit dem Signalisierungsbus (13) verbundenes Steuergerät (21) aufweist, wobei die Vorrichtung (15, Figur 1) ein Steuerorgan ist, das gemäß dem Protokoll des Busses (13) arbeitet, und die elektrische Parkbremsvorrichtung (20) ein gesteuertes Organ ist, das gemäß dem Protokoll des Busses (13) arbeitet.

**30.** Vorrichtung nach Anspruch 29, **dadurch gekennzeichnet, dass** das Steuergerät (21) mit dem Bus (13) über einen Eingangs-/Ausgangsport B und Einrichtungen verbunden ist, um Daten zu empfangen, die für die auf die mechanischen Bremsen (26, 27) des Bremssystems (5) angewendete Anziehkraft repräsentativ sind, die von einem Kraftsensor (24) gemessen wird, der zwischen einem in das Gehäuse (20) montierten Elektromotor (23) und einem mechanischen Wandler (25) eingefügt ist, von dem ein gelenkiger Ausgangshebel es ermöglicht, zwei Steuerseile der Bremsen (26, 27) gemäß einer Anziehkraft zu mobilisieren, die von dem vom Elektromotor (23) angewendeten Motordrehmoment bestimmt wird; dass der Elektromotor (23) von der Batterie des Fahrzeugs über eine Steuerschaltung (22) gespeist wird, die so ausgeführt ist, dass sie den den Elektromotor durchfließenden elektrischen Strom steuert, wobei dieser elektrische Strom von dem Steuergerät (20) berechnet und kontrolliert wird, von dem ein Ausgangsport A mit den geeigneten Eingängen der Steuerschaltung oder des Treibers (22) verbunden ist.

31. Vorrichtung nach einem der vorhergehenden Ansprüche, **dadurch gekennzeichnet, dass** sie in Form eines im Rechner des Fahrzeugs gespeicherten und ausgeführten Programms hergestellt wird.

Figure 1

Figure 2

<u>Figure 3</u>

<u>Figure 4</u>

## Figure 5

## Figure 6

EP 1 414 666 B1

Figure 7

Figure 8

28

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9828162 A
- WO 9846908 A
- EP 812747 A